# EUROPÄISCHE PATENTSCHRIFT

(11) **EP 2 255 104 B1**
(45) Veröffentlichungstag und Bekanntmachung des Hinweises auf die Patenterteilung: **04.07.2012**
(21) Anmeldenummer: 09711647.9
(22) Anmeldetag: 20.02.2009
(51) Int. Cl.: F16H 1/32

(54) **GETRIEBE**
TRANSMISSION
BOITE DE VITESSES

(30) Priorität: 20.02.2008 DE 102008010151
(43) Veröffentlichungstag der Anmeldung: 01.12.2010
(73) Patentinhaber: Spinea S.R.O., 08005 Presov (SK)
(72) Erfinder: JANEK, Bartolomej, 08001 Presov (SK)
(74) Vertreter: Jeck, Anton
(86) Internationale Anmeldenummer: PCT/EP2009/001241
(87) Internationale Veröffentlichungsnummer: WO 2009/103557

(56) Entgegenhaltungen:
- WO-A-95/22017
- WO-A-2007/020999
- JP-A- 2001 187 945
- JP-A- 2003 065 403
- US-A- 4 594 915

## Beschreibung

Die Erfindung betrifft ein Getriebe gemäß dem Oberbegriff des Anspruchs 1.

In der PL 169808 B1 ist ein Getriebe mit einem eine Innenverzahnung sowie eine Drehachse aufweisenden, becherförmigen Grundkörper beschrieben. In dem Grundkörper sind ein angetriebenes Eingangsorgan sowie ein Ausgangsorgan um die Drehachse drehbar gelagert. Das Ausgangsorgan umfasst einen Drehkörper mit einem quer zur Drehachse kreisrunden Querschnitt. Zwischen Drehkörper und dem Boden des becherförmigen Grundkörpers sind zwei das Innenzahnrad kämmende Zahnräder sowie Mittel zur Umwandlung von Planetenbewegungen der Zahnräder in Rotationsbewegungen des Ausgangsorgans angeordnet. Das Eingangsorgan ist im Drehkörper und im Boden gelagert. Der Drehkörper ist im Grundkörper und auf dem Eingangsorgan gelagert. Nachteile ergeben sich durch die nur einseitige Zugänglichkeit, insbesondere im Hinblick auf einen An- und Abtrieb, sowie durch die komplizierte und nicht kontrollierbare Montage im einseitig geschlossenen Becher.

In der EP 0 474 897 A1 ist ein Getriebe mit einem Grundkörper beschrieben, der eine Innenverzahnung aufweist. In dem Grundkörper sind eine angetriebene Eingangswelle sowie eine Ausgangswelle drehbar gelagert. Ein Ausgangsorgan ist axial verschiebbar mit der Ausgangswelle verbunden. Das Ausgangsorgan umfasst zwei mit Abstand zueinander angeordnete Drehkörper. Die Drehkörper weisen einen kreisrunden Querschnitt auf. Die Eingangs- und Ausgangswelle stehen senkrecht auf den beiden Drehkörpern. Die Drehkörper sind fest miteinander verbindbar bzw. verbunden. Zwischen den Drehkörpern sind zwei das Innenzahnrad kämmende Zahnräder sowie Mittel zur Umwandlung von Planetenbewegungen der Zahnräder in Rotationsbewegungen des Ausgangsorgans angeordnet. Das Ausgangsorgan ist lagerfrei mittels der die Innenverzahnung kämmenden Zahnräder gegenüber dem Grundkörper in radialer Richtung abgestützt. Eine Abstützung des Ausgangsorgans gegenüber dem Grundkörper in axialer Richtung existiert nicht bzw. ist ebenfalls lagerfrei ausgeführt, so dass Axialbewegungen des Ausgangsorgans erst durch einen Kontakt mit einem Deckel oder dem Grundkörper oder mit den Flanken der Innenverzahnung aufgehalten werden. Nachteilig hieran ist die geringe Leistungsfähigkeit des Getriebes in Verbindung mit hohem zu erwartendem Verschleiß durch das Lagerfrei im Grundkörper angeordnetem Ausgangsorgan.

Aus WO 95/22017 ist ein Getriebe mit einem eine Innenverzahnung sowie eine Drehachse aufweisenden hohlzylinderartigen Grundkörper mit Stirnseiten bekannt. In dem Grundkörper sind ein angetriebenes Eingangsorgan sowie ein Ausgangsorgan um die Drehachse drehbar gelagert. Das Ausgangsorgan umfasst zwei mit Abstand zueinander angeordnete Drehkörper mit einem quer zur Drehachse kreisrunden Querschnitt. Die Drehachse steht senkrecht auf den beiden Drehkörpern. Die Drehkörper sind fest miteinander verbindbar bzw. verbunden. Zwischen den Drehkörpern sind mindestens ein das Innenzahnrad kämmendes Zahnrad sowie Mittel zur Umwandlung von Planetenbewegungen des Zahnrades in Rotationsbewegungen des Ausgangsorgans angeordnet. Das Eingangsorgan ist in den Drehkörpern des Ausgangsorgans beidseitig gelagert, welches wiederum in dem hohlzylinderartigen Grundkörper beidseitig gelagert ist.

Beide Drehkörper sind dabei unmittelbar am bzw. im Grundkörper gelagert. Dies hat zur Folge, dass die einstellbare Kraft, welche die beiden Drehkörper zusammenhält, gleichzeitig auf die Lagerung der beiden Drehkörper einwirkt. Wird die in axialer Richtung wirkende Kraft erhöht, wird auch die Steifigkeit und Festigkeit des Getriebes erhöht .Als Folge hiervon kommt es zu Verspannungen der Lagerung, zu erhöhtem Verschleiß und Erhitzung und im schlimmsten Fall zu einem Blockieren des Getriebes. Werden die axialen Kräfte so eingestellt, dass die Lagerkörper optimal eingestellt sind, erfolgt dies auf Kosten der Steifigkeit und Festigkeit des Getriebes. Außerdem gestaltet sich der Zusammenbau des Getriebes als umständlich, da die zwischen den Drehkörpern angeordneten Teile eingebracht werden müssen, wenn ein Drehkörper bereits im Grundkörper angeordnet ist. Darüber hinaus werden auf das Getriebe einwirkende, insbesondere in axialer Richtung wirkende äußere Kräfte ins Innere des Getriebes übertragen und führen dort zu Wechselbelastungen und Ermüdungserscheinungen.

Die Lagerung ist dabei so ausgebildet, dass jeweils ein Radiallager jeweils einen Drehkörper gegenüber normal zur Drehachse wirkenden Radialkräften an jeweils einer Stirnseite am Grundkörper abstützt. Darüber hinaus stützt jeweils ein Axiallager jeweils einen der beiden beidseitig des Grundkörpers angeordneten Drehkörper jeweils gegenüber in Richtung der Drehachse zum Grundkörper hin gerichteten Axialkräften an jeweils einer Stirnseite des Grundkörpers ab. Das Eingangsorgan ist in prinzipiell gleicher Weise an den Drehkörpern gelagert. Die Axiallager, die das Eingangsorgan in den Drehkörpern gegen Axialkräfte abstützen, sind jedoch genau umgekehrt angeordnet, wie die Axiallager zum Abstützen der Drehkörper gegenüber dem Grundkörper. Dies bedeutet, dass das Eingangsorgan mittels jeweils einem Axiallager an den beiden Drehkörpern gelagert ist, welches jeweils auf das Eingangsorgan in Richtung der Drehachse weg vom Grundkörper wirkende Axialkräfte auf den jeweils in Kraftrichtung außen am Grundkörper angeordneten Drehkörper überträgt. Wahlweise können kombinierte Radial-Axial-Lager beide Funktionen gleichzeitig erfüllen.

Wesentlich ist, dass das Getriebe ohne eine Verbindung zwischen den beiden Drehkörpern auseinander fallen würde.

Um dies zu verhindern, sind die beiden Drehkörper des Ausgangsorgans mittels Verbindungselementen, beispielsweise Schrauben, lösbar miteinander verbunden. Die Verbindungselemente erfüllen dabei gleich mehrere Funktionen. Zum einen stellen sie sicher, dass an den beiden durch die zwei Drehkörper gebildeten Abtriebseiten, regelmäßig Arbeitsseiten, des Getriebes gleiche Drehzahlen und gleiche Drehmomente anliegen. Indem die Verbindungselemente die Drehkörper miteinander verbinden, halten sie zum anderen auch die in dem Grundkörper entlang der Drehachse zwischen den Drehkörpern liegenden Teile des Getriebes zusammen. Diese Teile sind im Wesentlichen ein oder mehrere, durch das Eingangsorgan in einer Exzenterbewegung angetriebene, mit dem Innenzahnrad kämmende Zahnräder, das Eingangsorgan selbst, sowie die Mittel zur Umwandlung von Planetenbewegungen des oder der Zahnräder in Rotationsbewegungen des Ausgangsorgans. Außerdem übertragen die Verbindungselemente auf das Eingangsorgan und/oder das Ausgangsorgan einwirkende Axialkräfte auf denjenigen Drehkörper, dessen Axiallagerung in der Lage ist, die jeweiligen Axialkräfte wiederum auf den Grundkörper zu übertragen. Solche Axialkräfte bzw. Axialkräftepaare können beispielsweise auch durch auf das Ein- und/oder Ausgangsorgan einwirkende Momente quer zur Drehachse entstehen. Zusätzlich hindern die Verbindungselemente die zwischen Ausgangsorgan und Eingangsorgan sowie zwischen Ausgangsorgan und Grundkörper angeordneten Lager am Auseinanderfallen, indem sie die Drehkörper gegenseitig gegen die stirnseitigen Laufflächen des Grundkörpers pressen.

Soll eine besonders hohe Laufruhe und hohe Übersetzungs- sowie Übertragungsqualität der Antriebsleistung von der Antriebs- zur Abtriebsseite erreicht werden, so ergeben sich aus der mehrfachen Funktion der Verbindungselemente besondere Schwierigkeiten. So müssen beispielsweise zur Übertragung von auf das Eingangs- und/oder Ausgangsorgan einwirkenden Axialkräften und/oder Kräftepaaren über die Lager der Drehkörper auf den Grundkörper die Verbindungselemente die beiden Drehkörper mit einer Vorspannung zusammenpressen, da ansonsten diese Kräfte die Drehkörper auseinander ziehen könnten. Würden die Drehkörper auseinander gezogen, wäre ein sicherer und präziser Betrieb des Getriebes, auf den es in den meisten Fällen entscheidend ankommt, nicht mehr gewährleistet. Die Erzeugung einer entsprechend großen Vorspannung erfordert eine entsprechend große Dimensionierung der Verbindungselemente. Groß dimensionierte Verbindungselemente erfordern jedoch Bauraum und erhöhen das Gewicht eines solchen Getriebes. Die Lager zwischen Eingangsorgan und Drehkörpern sowie zwischen Drehkörpern und Grundkörper dürfen durch die Vorspannung nicht zu stark in axialer Richtung zusammengepresst werden. Ansonsten kommt es zu einer übermäßigen Erwärmung des Getriebes durch Reibungsverluste in den Lagern. Da sich jedoch die Toleranzen der entlang der Drehachse zwischen den Drehkörpern angeordneten Teile des Getriebes, ebenso wie die Toleranzen der Drehkörper und des Grundkörpers aufaddieren, sind die oben genannten Forderungen gegenläufig.

Zum einen deshalb, da es vorkommen kann, dass bei einer ungünstigen Aufsummierung der Toleranzen der zwischen den Drehkörpern angeordneten Teile diese bei einer erforderlichen hohen Vorspannung der Drehkörper ebenfalls zusammengepresst werden können. Hierdurch kann es zu hohen Reibungsverlusten zwischen diesen Teilen kommen, wodurch das Getriebe überhitzt und zerstört werden kann. Im schlimmsten Fall können diese Teile sogar festsitzen. Zum anderen deshalb, da es vorkommen kann, dass bei einer ungünstigen Aufsummierung der Toleranzen der Drehkörper und des Grundkörpers und/oder der Drehkörper und des Eingangsorgans die Axiallager zwischen den Drehkörpern und dem Grundkörper und/oder die Axiallager zwischen Eingangsorgan und den beiden Drehkörpern bei einer erforderlichen hohen Vorspannung der Drehkörper ebenfalls zusammengepresst werden können. Hierdurch kann es ebenfalls zu hohen Reibungsverlusten in den Axiallagern kommen, wodurch das Getriebe überhitzen und frühzeitig versagen kann. Schließlich ist in diesem Zusammenhang von Bedeutung, dass es sogar zur konkaven Durchbiegung der Drehkörper kommen kann.

Ein weiterer Nachteil, der sich aus der Mehrfachfunktion der Verbindungselemente ergibt, ist, dass die durch die Verbindungselemente aufgebrachte Vorspannung während des Betriebs des Getriebes nachlassen kann, zumal die Verbindungselemente ständig belastet werden.

Die Nachteile des Standes der Technik können somit wie folgt zusammengefasst werden:
a) gegenseitige dynamische Belastung der Drehkörper;
b) alle Teile des Ausgangsorgans müssen mit besonders hoher Präzision hergestellt und auf die korrespondierenden Teile des Grundkörpers abgestimmt werden, was zu einer langen und nachteiligen Toleranzkette führt;
c) die Kippsteifigkeit des Ausgangsorgans ist durch die Nachgiebigkeit der in axialer Richtung sich erstreckenden Verbindungsmittel (Schrauben) limitiert;
d) hohes Anlaufmoment des Getriebes

Durch der gattungsgemäßen JP 2003-65403 A ist ein Getriebe mit einem eine Innenverzahnung sowie eine Drehachse aufweisenden hohlzylinderartigen Grundkörper mit Stirnseiten bekannt. In dem Grundkörper sind ein angetriebenes Eingangsorgan sowie ein Ausgangsorgan drehbar gelagert. Das Ausgangsorgan umfasst zwei unverdrehbar miteinander verbundene, einen quer zur Drehachse verlaufenden Querschnitt mit kreisrunder Außenkontur aufweisende Drehkörper. Zwischen den Drehkörpern sind mindestens ein Zahnrad sowie Mittel zur Umwandlung von Planetenbewegungen des Zahnrades in Rotationsbewegungen des Ausgangsorgans angeordnet. Dabei sind die das Ausgangsorgan zusammenhaltenden Kräfte sowie die Lagerungskräfte, die zwischen dem Ausgangsorgan und dem Grundkörper wirken, derart voneinander unabhängig, dass zumindest in axialer Richtung wirkende äußere Kräfte von einem der beiden Drehkörper übernommen sind und der andere Drehkörper frei von solchen Kräften ist, so dass eine von die beiden Drehkörper zusammenhaltenden Verbindungsmitteln wirkende Kraft statisch und unabhängig von äußeren Kräften und Momenten ist. Das Eingangsorgan weist eine durchgehende Öffnung auf.

Der Erfindung liegt die Aufgabe zugrunde, hier Abhilfe zu schaffen und insbesondere das gattungsgemäße Getriebe ohne unangemessen konstruktiven Aufwand so weiter zu bilden, dass bei einfacherer Herstellung der Einzelteile und Zusammenbau des Getriebes eine höhere Torsionsfestigkeit sowie höhere Leistungsdichte bei gleichen Maßen erreicht wird.

Die Aufgabe wird gelöst durch die Merkmale des Anspruchs 1.

Man erkennt, dass die Erfindung jedenfalls dann verwirklicht ist, wenn ein Getriebe demnach einen eine Innenverzahnung sowie eine Drehachse aufweisenden hohlzylinderartigen Grundkörper mit Stirnseiten umfasst. In dem Grundkörper sind ein angetriebenes Eingangsorgan sowie ein Ausgangsorgan drehbar gelagert. Das Ausgangsorgan umfasst zwei unverdrehbar miteinander verbindbare bzw. verbundene Drehkörper. Die Drehkörper haben einen quer zur Drehachse kreisrunden Querschnitt. Zwischen den Drehkörpern ist mindestens ein Zahnrad angeordnet. Das Zahnrad kämmt vorzugsweise mit der Innenverzahnung. Zwischen den Drehkörpern sind Mittel zur Umwandlung von Planetenbewegungen des Zahnrades in Rotationsbewegungen des Ausgangsorgans angeordnet. Bei dem Getriebe sind die das Ausgangsorgan zusammenhaltenden Kräfte unabhängig von den Lagerungskräften, die zwischen dem Ausgangsorgan und dem Grundkörper wirken.

Damit die das Ausgangsorgan zusammenhaltenden Kräfte von den zwischen dem Ausgangsorgan und dem Grundkörper wirkenden Lagerungskräften unabhängig sind, ist vorzugsweise vorgesehen, dass das Ausgangsorgan zusammenhaltende Axialkräfte zwischen den Drehkörpern des Ausgangsorgans aufgebracht werden bzw. aufgebracht sind. Die zwischen dem Ausgangsorgan und dem Grundkörper wirkenden axialen Lagerungskräfte werden bzw. sind zwischen nur einem der beiden Drehkörper des Ausgangsorgans und dem Grundkörper aufgebracht.

Die das Ausgangsorgan zusammenhaltende Axialkräfte werden bzw. sind vorzugsweise durch zwischen den Drehkörpern des Ausgangsorgans wirkende Mittel aufgebracht.

Die axialen Lagerungskräfte, die zwischen dem Ausgangsorgan und dem Grundkörper wirken, werden bzw. sind vorzugsweise mittels nur auf einen der beiden Drehkörper des Ausgangsorgans einwirkenden Mitteln aufgebracht.

Man erkennt, dass die Erfindung jedenfalls dann verwirklicht ist, wenn bei einem herkömmlichen Planetengetriebe das kompakte Ausgangsorgan mit regelmäßig zwei parallel und mit Abstand zueinander verlaufenden Drehkörpern so gelagert ist, dass von den beiden Drehkörpern nur ein einziger Drehkörper unmittelbar im oder am Grundkörper gelagert ist. Die beiden Drehkörper bilden die zwei Stirnseiten des Ausgangsorgans sowie des Grundkörpers. Die auf das Ausgangsorgan während des Betriebes des Getriebes zumindest in axialer Richtung wirkenden äußeren Kräfte werden praktisch vollständig vom unmittelbar im oder am Grundkörper gelagerten Drehkörper übernommen. Der auf der anderen Seite des Grundkörpers sich befindliche andere Drehkörper ist äußeren Kräften praktisch nicht ausgesetzt und insbesondere zumindest in axialer Richtung wirkenden äußeren Kräften nicht ausgesetzt. Dieser Drehkörper steht auch nicht im Arbeitskontakt mit dem Grundkörper. Die einzige wichtige Kraft, die auf den nicht am oder im Grundkörper drehbar gelagerten oder nur mittelbar am oder im Grundkörper drehbar gelagerten oder nur zur Abstützung gegenüber Radialkräften unmittelbar am oder im Grundkörper drehbar gelagerten Drehkörper wirkt, ist die von den Verbindungsmitteln, regelmäßig Schrauben, wirkende statische Kraft, um das als Einheit ausgebildete Ausgangsorgan zusammenzuhalten. Bei dieser Konstellation ist gewährleistet, dass die zumindest in axialer Richtung auf den unmittelbar am oder im Grundkörper gelagerten Drehkörper wirkenden äußeren Arbeitskräfte nicht auf den anderen Drehkörper übertragen werden. Dies hat zu Folge, dass die einzigen Bereiche des Getriebes, der mit hoher Präzision bearbeitet werden müssen, die zur Lagerung des Ausgangsorgans vorgesehen Kontakt- und Laufflächen des Grundkörpers, des unmittelbar am oder im Grundkörper gelagerten Drehkörpers sowie des Haltekörpers sind. Da diese Flächen von einer Richtung des Getriebes problemlos zugänglich sind, kann die Herstellungszeit des Getriebes halbiert werden. Ein weiterer Vorteil der erfinderischen Maßnahmen besteht darin, dass durch die besondere Positionierung der Lagerelemente der aktive Innenraum des Getriebes merklich vergrößert und somit die Leistung des Getriebes bei unveränderten Außenmaßen und deutlich geringerem Gewicht erheblich erhöht wird.

Ganz allgemein ist der tragende Gedanke der Erfindung bei allen Typen von Planetengetrieben anwendbar. Bei dem erfindungsgemäßen Getriebe ist zum Erhalt der Unabhängigkeit der Lagerkräfte und der die Drehkörper zusammenhaltenden Kräfte vorzugsweise nur einer der Drehkörper vorzugsweise zumindest in Bezug auf Axialkräfte unmittelbar im Grundkörper gelagert. Darüber hinaus ist vorzugsweise ein mit einer Stirnseite fest verbindbarer, ringartiger Haltekörper vorgesehen, an dem sich der unmittelbar am Grundkörper gelagerte Drehkörper über Lagermittel abstützt. Der Haltekörper kann bevorzugt als dickwandiger und leicht bearbeitbarer Rohrabschnitt ausgebildet sein, dessen beiden Stirnseiten nur noch problemlos geschliffen und mit passenden Öffnungen für Schrauben versehen werden müssen. Der unmittelbar am Grundkörper gelagerte Drehkörper kann sich darüber hinaus mit denselben oder mit anderen Lagermitteln am Grundkörper abstützen.

Das erfindungsgemäße Getriebe weist gegenüber dem Stand der Technik ferner den Vorteil auf, dass durch die nunmehr zumindest in Bezug auf Axialkräfte einseitige Lagerung des Ausgangsorgans im Bereich nur eines Drehkörpers die Verbindungselemente, regelmäßig Schrauben, weitestgehend lastfrei sind. Eine Kraftübertragung vom gelagerten Drehkörper auf ein das Getriebe tragendes Gestell findet nunmehr unter völliger Umgehung des nunmehr zumindest in Bezug auf Axialkräfte ungelagerten, zweiten Drehkörpers und damit unter Umgehung der die beiden Drehkörper miteinander verbindenden Verbindungselemente statt.

Neben einer Abhilfe der aus dem Stand der Technik bekannten Nachteile weist das erfindungsgemäße Getriebe zusätzlich den Vorteil auf, dass es wesentlich einfacher herzustellen und zu montieren ist. Dies ist unter anderem dadurch bedingt, dass Lagermittel zur Lagerung der Drehkörper unmittelbar am oder im Grundkörper und zur Abstützung zumindest in Bezug auf Axialkräfte nur noch an einer Seite des Grundkörpers angeordnet werden müssen. Da diese Lagermittel vorzugsweise die einzige Verbindung der zwischen den Drehkörpern angeordneten Teile und dem Grundkörper sind, kann das erfindungsgemäße Getriebe bequem in aufeinander folgenden Schritten hergestellt werden. Zunächst können alle zwischen den Drehkörpern liegenden Teile montiert und durch Verbinden der beiden Drehkörper miteinander positioniert werden. Anschließend kann der komplette Block aus Drehkörpern und dazwischen angeordneten Teilen im Grundkörper angeordnet werden. Dabei ist nicht mehr wie beim Stand der Technik erforderlich, dass die Drehkörper und die dazwischen angeordneten Teile im Grundkörper montiert werden müssen. Gemäß der Erfindung müssen beispielsweise die Lagermittel zwischen Grundkörper und gelagertem Drehkörper erst bei der Montage des vormontierten Blocks im Grundkörper eingebracht werden. Hierdurch wird die Montagezeit verkürzt und es treten weniger Montagefehler auf.

Die Mittel zur Umwandlung von Planetenbewegungen des Zahnrades in Rotationsbewegungen des Ausgangsorgans können beispielsweise, wie in WO 95/22017 beschrieben, ein in zwei orthogonalen Richtungen verschiebbar zwischen Zahnrad und Drehkörpern angeordnetes Transformationselement in Form eines Kreuzes sein. Die Mittel zur Umwandlung von Planetenbewegungen des Zahnrades in Rotationsbewegungen des Ausgangsorgans können jedoch auch beispielsweise wie in WO 2006/058743 beschrieben, exzenterringförmige Hülsen, die zwischen Ausnehmungen am Zahnrad oder am Drehkörper und am Drehkörper oder am Zahnrad angeordneten, in die Ausnehmungen am Zahnrad oder am Drehkörper ragenden Zapfen angeordnet sind, sein.

Wichtig ist hervorzuheben, dass zur Befestigung des Ausgangsorgans am Grundkörper einer der Drehkörper vorzugsweise unmittelbar am oder im Grundkörper drehbar gelagert ist.

Zur Befestigung des Ausgangsorgans am Grundkörper kann einer der Drehkörper zur Abstützung zumindest gegenüber Axialkräften unmittelbar am oder im Grundkörper drehbar gelagert sein, wohingegen der andere Drehkörper nicht am oder im Grundkörper gelagert ist, oder nur mittelbar am oder im Grundkörper drehbar gelagert ist, oder nur zur Abstützung gegenüber Radialkräften unmittelbar am oder im Grundkörper drehbar gelagert ist.

Einer der Drehkörper kann vorzugsweise sowohl zur Abstützung gegenüber Axialkräften, als auch zur Abstützung gegenüber Radialkräften unmittelbar am oder im Grundkörper drehbar gelagert sein.

Vorzugsweise stützt sich der unmittelbar am oder im Grundkörper drehbar gelagerte Drehkörper über Lagermittel an dem mit der einen Stirnseite fest verbindbaren bzw. verbundenen Haltekörper ab.

Eine vorteilhafte Ausgestaltung der Erfindung sieht vor, dass die Lagermittel im Bereich derjenigen Stirnseite angeordnet sind, an der der Haltekörper angeordnet ist. Hierdurch wird die Herstellung eines erfindungsgemäßen Getriebes gegenüber dem Stand der Technik sowohl durch eine wesentlich verbesserte und einfachere Zugänglichkeit der Laufbahnen für die Wälzkörper der Lagermittel, als auch durch eine vereinfachte Positionierung der Wälzkörper der Lagermittel bei der Fertigstellung des erfindungsgemäßen Getriebes erreicht.

Eine andere vorteilhafte Ausgestaltung der Erfindung sieht vor, dass mindestens an dem unmittelbar am oder im Grundkörper gelagerten Drehkörper sowie im Grundkörper Laufbahnen für die Lagermittel des Drehkörpers im Grundkörper bildende Wälzkörper vorgesehen sind, beispielsweise in Form von Ebenen und/oder Nuten mit polierten und gehärteten Oberflächen.

Eine zusätzliche, vorteilhafte Ausgestaltung der Erfindung sieht vor, dass zumindest die Lagermittel, sowie vorzugsweise zugehörige Laufflächen, die zur Abstützung des unmittelbar am oder im Grundkörper gelagerten Drehkörpers gegenüber in axialer Richtung hin zur Innenverzahnung verlaufender Kräfte im Bereich eines Mittels, welches der Umwandlung von Planetenbewegungen des Zahnrades in Rotationsbewegungen des Ausgangsorgans dient und welches auf der selben Seite der Innenverzahnung wie der unmittelbar am oder im Grundkörper gelagerte Drehkörper angeordnet ist, radial nach außen versetzt angeordnet sind. Ein sich hieraus ergebender Vorteil ist, dass indem die die Lagermittel bildenden Wälzkörper im Bereich beispielsweise eines Transformationselements, welches die Planetenbewegungen des Zahnrades in Rotationsbewegungen des Ausgangsorgans umwandelt, radial nach außen verlagert sind, ein Getriebe mit besonders kompakten Außenabmessungen und insbesondere mit einer kurzen Baulänge geschaffen wird.

Eine besonders vorteilhafte Ausgestaltung der Erfindung sieht vor, dass zumindest die Lagermittel sowie vorzugsweise zugehörige, um die Drehachse geschlossen umlaufende Laufflächen, die zur Abstützung des unmittelbar am oder im Grundkörper gelagerten Drehkörpers gegenüber in axialer Richtung verlaufender Kräfte vorgesehen sind, gegenüber einem Mittel, welches der Umwandlung von Planetenbewegungen des Zahnrades in Rotationsbewegungen des Ausgangsorgans dient und welches auf der selben Seite der Innenverzahnung wie der unmittelbar am oder im Grundkörper gelagerte Drehkörper angeordnet ist, in Richtung der Drehachse weg von der Innenverzahnung versetzt angeordnet sind. Ein sich hieraus ergebender Vorteil ist, dass sich eine Vergrößerung des zur Verfügung stehenden Innenraumes für die zwischen den Drehkörpern liegenden beweglichen Teile ergibt. Dies erfolgt dadurch, indem die die Lagermittel bildenden Wälzkörper gegenüber den zwischen den Drehkörpern angeordneten Teilen axial versetzt und nach außen verlagert angeordnet werden. Hierdurch kann das Getriebe bei gleichem Außendurchmesser robuster ausgeführt werden, da beispielsweise den Transformationselementen im Grundkörper ein größerer Bauraum in radialer Richtung zur Verfügung steht.

Eine andere, besonders vorteilhafte Ausgestaltung der Erfindung sieht vor, dass die Lagermittel als kugelförmige Wälzelemente ausgebildet sind, welche den unmittelbar am oder im Grundkörper gelagerten Drehkörper sowohl in axialer, als auch in radialer Richtung abzustützen, und welche in einem gemeinsamen, durch am Haltekörper, dem Grundkörper, sowie dem unmittelbar am oder im Grundkörper gelagerten Drehkörper ausgebildete, um die Drehachse geschlossen umlaufende Laufflächen begrenzten Ringraum im Bereich der Stirnseite, an der der Haltekörper angeordnet ist, angeordnet sind. Ein sich aus dieser Ausgestaltung ergebender Vorteil ist, dass nur ein einziger Ringraum erforderlich ist, um sämtliche auf den Drehkörper einwirkenden Axial- und Radialkräfte über gemeinsame Wälzelemente auf den Grundkörper und den mit dem Grundkörper über Befestigungsmittel verbundenen Haltekörper zu übertragen.

Eine zusätzliche, besonders vorteilhafte Ausgestaltung der Erfindung sieht vor, dass die Lagermittel als zylinderförmige Wälzelemente ausgebildet sind, welche den unmittelbar am oder im Grundkörper gelagerten Drehkörper sowohl in axialer, als auch in radialer Richtung abzustützen, und welche in einem gemeinsamen, durch am Haltekörper, dem Grundkörper, sowie dem unmittelbar am oder im Grundkörper gelagerten Drehkörper ausgebildete, jeweils um 45° gegenüber der Drehachse geneigten, um die Drehachse geschlossen umlaufenden Laufflächen begrenzten Ringraum im Bereich der Stirnseite, an der der Haltekörper angeordnet ist, angeordnet sind. Ein Vorteil dieser Ausgestaltung ist, dass die zylinderförmigen Wälzelemente im Gegensatz zu kugelförmigen Wälzelementen höhere Belastungen ertragen, da sie nicht punktförmig, sondern linienförmig auf den jeweils zugeordneten Laufflächen aufliegen.

Gemäß einer vorteilhaften Ausgestaltung der Erfindung ist vorgesehen, dass das Getriebe auf seiner einem ungelagerten oder nur mittelbar am oder im Grundkörper gelagerten oder nur zur Abstützung gegenüber Radialkräften unmittelbar am oder im Grundkörper gelagerten Drehkörper zugewandten Seite einen Deckel aufweist, der die beweglichen Teile im Inneren des Getriebes vor Verschmutzung schützt.

Vorzugsweise weist der Deckel eine zentrale Öffnung auf, durch die das Eingangsorgan beispielsweise zur Verbindung mit einem Antriebsmotor geführt ist.

Um das Eindringen von Verunreinigungen in das Getriebe zu unterbinden kann zwischen Deckel und Eingangsorgan im Bereich der zentralen Öffnung eine umlaufende Dichtung angeordnet sein.

Besonders vorzugsweise ist am Deckel eine Lauffläche für Lagerkörper ausgebildet, mit denen das Eingangsorgan auf seiner einem ungelagerten oder nur mittelbar am oder im Grundkörper gelagerten oder nur zur Abstützung gegenüber Radialkräften unmittelbar am oder im Grundkörper gelagerten Drehkörper zugewandten Seite am Deckel gelagert ist. Hierdurch wird sichergestellt, dass keine Axialkräfte auf den ungelagerten Drehkörper einwirken, wodurch ebenfalls sichergestellt ist, dass die die beiden Drehkörper miteinander verbindenden Verbindungselemente keine Axialkräfte zwischen den Drehkörpern übertragen müssen.

Zwischen unmittelbar am oder im Grundkörper gelagertem Drehkörper und Haltekörper kann vorzugsweise eine umlaufende Dichtung vorgesehen sein, die das Eindringen von Verunreinigungen in das Getriebe auf der Abtriebseite unterbindet.

Gemäß einer besonders vorteilhaften Ausgestaltung der Erfindung ist die dem unmittelbar am oder im Grundkörper gelagerten Drehkörper zugewandte Seite des Getriebes als Abtriebseite, und die dem ungelagerten oder nur mittelbar am oder im Grundkörper gelagerten oder nur zur Abstützung gegenüber Radialkräften unmittelbar am oder im Grundkörper gelagerten Drehkörper zugewandte Seite des Getriebes als Antriebseite des Getriebes ausgebildet. Erfahrungsgemäß sind die Belastungen auf der Abtriebseite größer, als auf der Antriebseite, weshalb es vorteilhaft ist, die Abtriebseite am gelagerten Drehkörper 50 auszubilden, da so die auf die Lagermittel einwirkenden Momente und die daraus resultierenden Kräftepaare kleiner sind.

Die Erfindung wird nachfolgend anhand von Ausführungsbeispielen näher erläutert. Es zeigen:

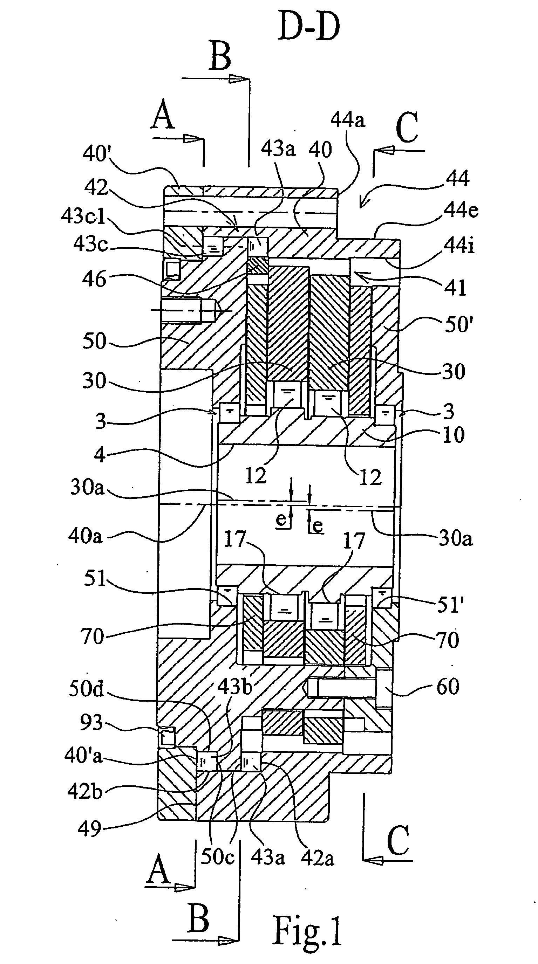

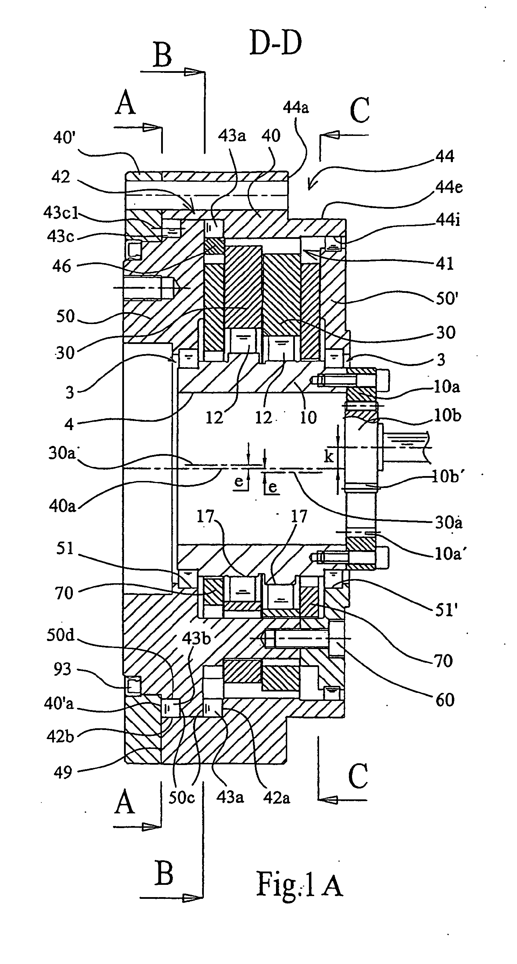

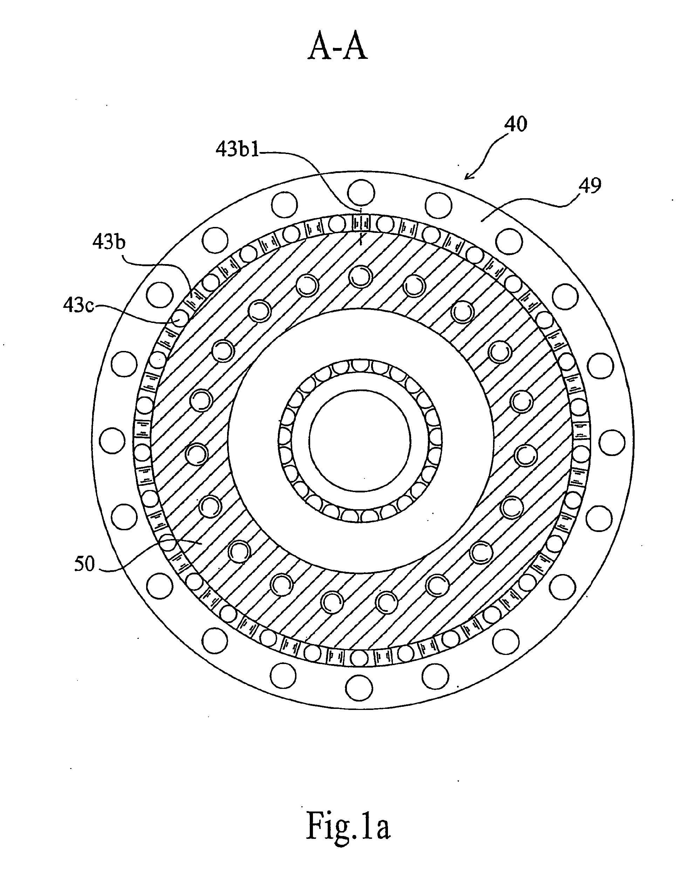

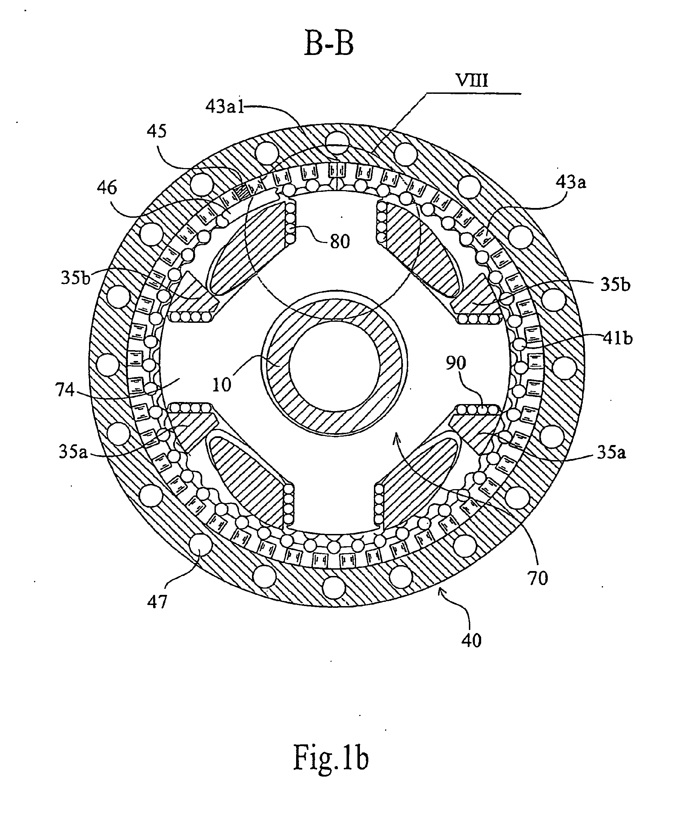

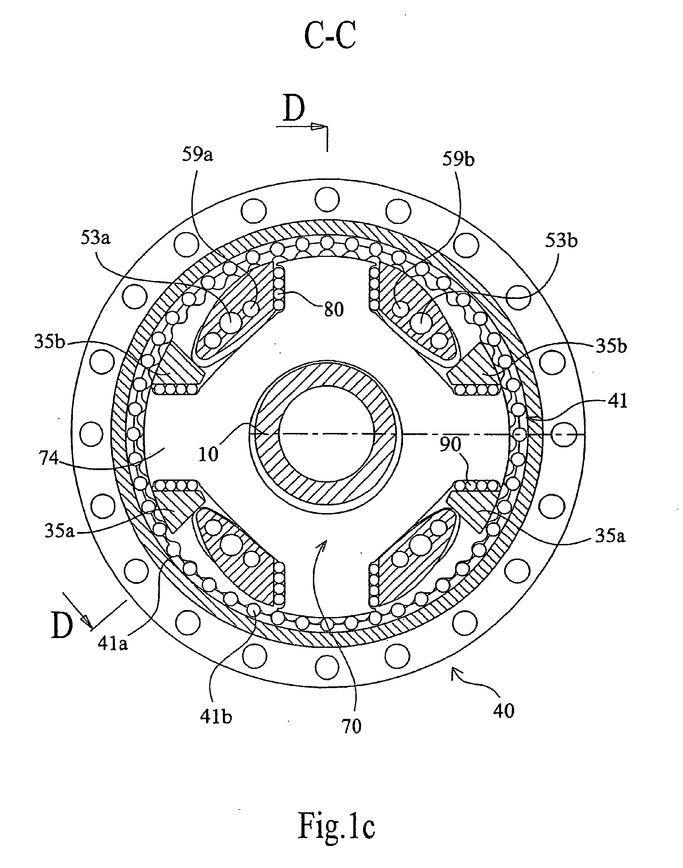

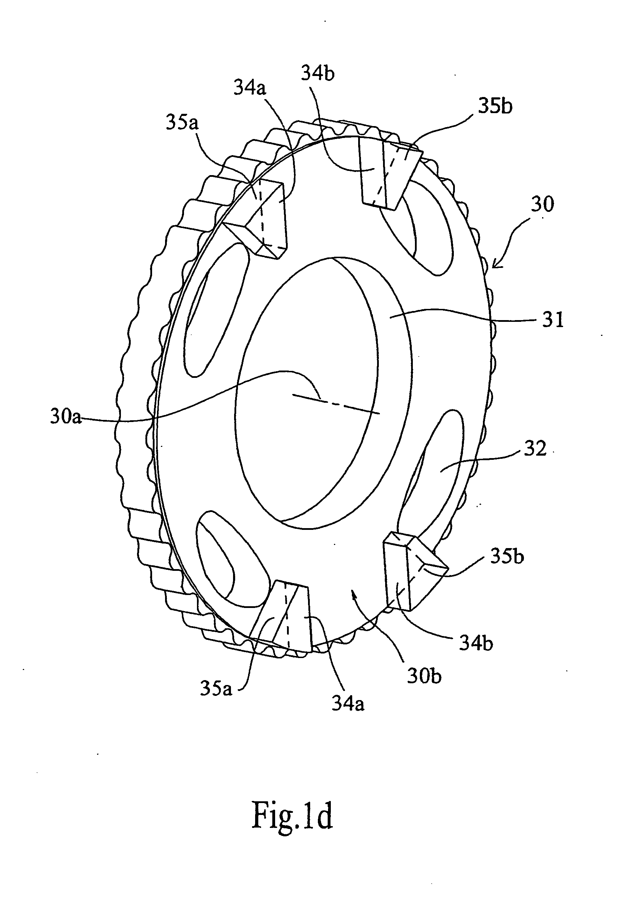

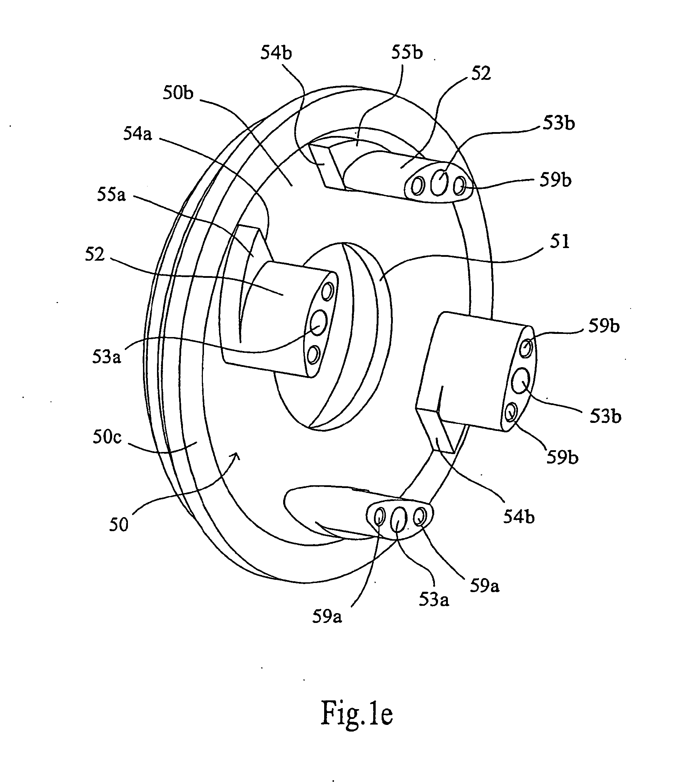

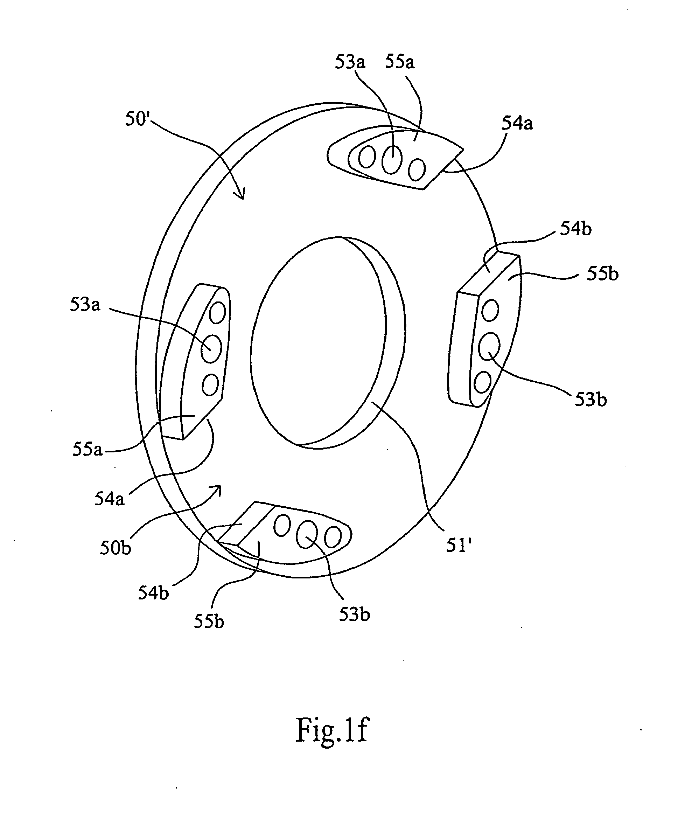

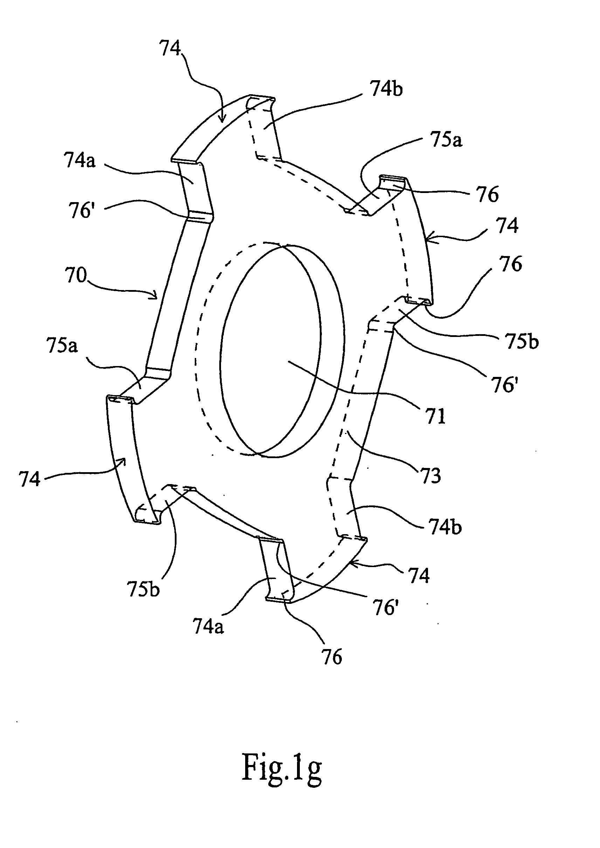

- Fig. 1: eine schematische Darstellung eines ersten Ausführungsbeispiels eines erfindungsgemäßen Getriebes in einem Querschnitt,
- Fig. 1A: ein Getriebe nach Fig.1 mit einem Vorschaltgetriebe,
- Fig. 1a: einen Schnitt entlang der Linie A-A nach Fig. 1,
- Fig. 1b: einen Schnitt entlang der Linie B-B nach Fig. 1,
- Fig. 1c: einen Schnitt entlang der Linie C-C nach Fig. 1,
- Fig. 1d: eine perspektivische Darstellung eines Zahnrades des Getriebes aus Fig. 1,
- Fig. 1e: eine perspektivische Darstellung eines einen ersten Teil eines Ausgangsorgans bildenden ersten Drehkörpers des Getriebes aus Fig. 1,
- Fig. 1f: eine perspektivische Darstellung eines einen zweiten Teil eines Ausgangsorgans bildenden zweiten Drehkörpers des Getriebes aus Fig. 1,
- Fig. 1g: eine perspektivische Darstellung eines Transformationselements des Getriebes aus Fig. 1,
- Fig. 2: eine schematische Darstellung eines zweiten Ausführungsbeispiels eines erfindungsgemäßen Getriebes in einem Querschnitt,
- Fig. 2a: einen Schnitt entlang der Linie A-A bzw. B-B nach Fig. 2,
- Fig. 3: eine schematische Darstellung eines dritten Ausführungsbeispiels eines erfindungsgemäßen Getriebes in einem Querschnitt,
- Fig. 4: eine schematische Darstellung eines vierten Ausführungsbeispiels eines erfindungsgemäßen Getriebes in einem Querschnitt,
- Fig. 5: eine zum Verständnis der Erfindung beitragende schematische Darstellung eines Getriebes nach dem Stand der Technik mit angeflanschtem Antriebsmotor,
- Fig. 6: ein erstes Ausführungsbeispiel des Details VI aus Fig. 5,
- Fig. 7: ein zweites Ausführungsbeispiel des Details VI aus Fig. 5,
- Fig. 8: das Detail VIII aus Fig. 1b, sowie
- Fig. 9: eine Explosionsdarstellung des Getriebes aus Fig. 5.

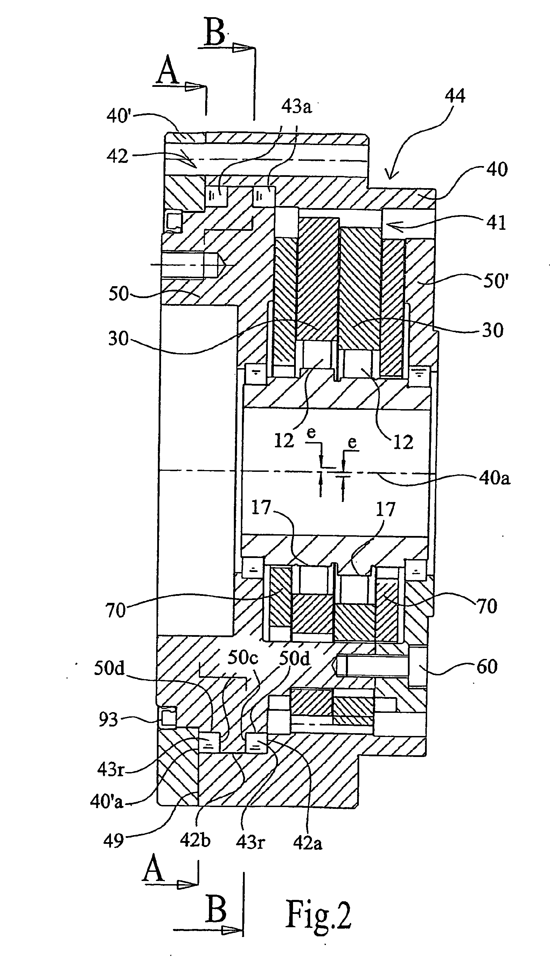

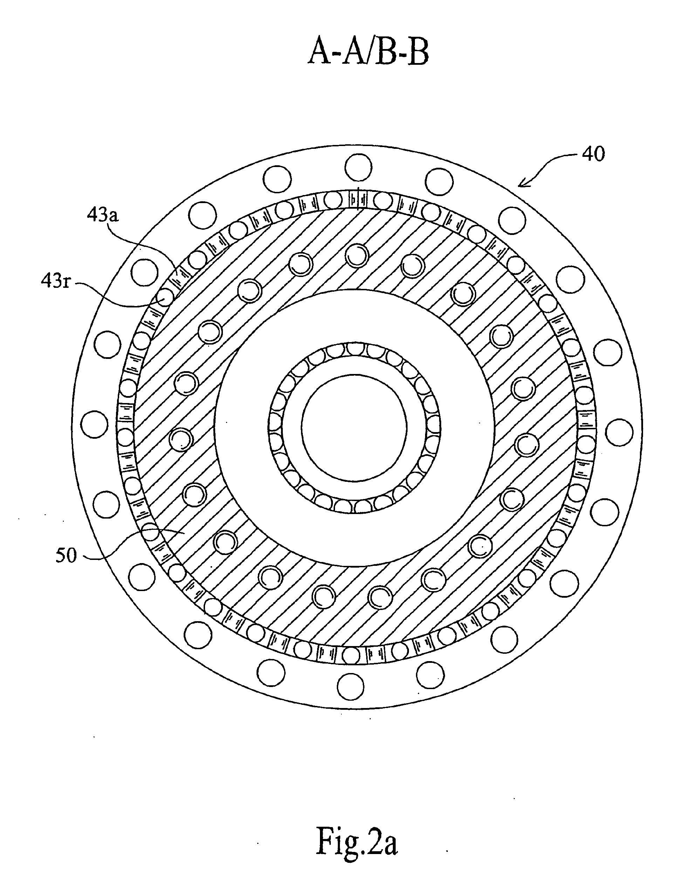

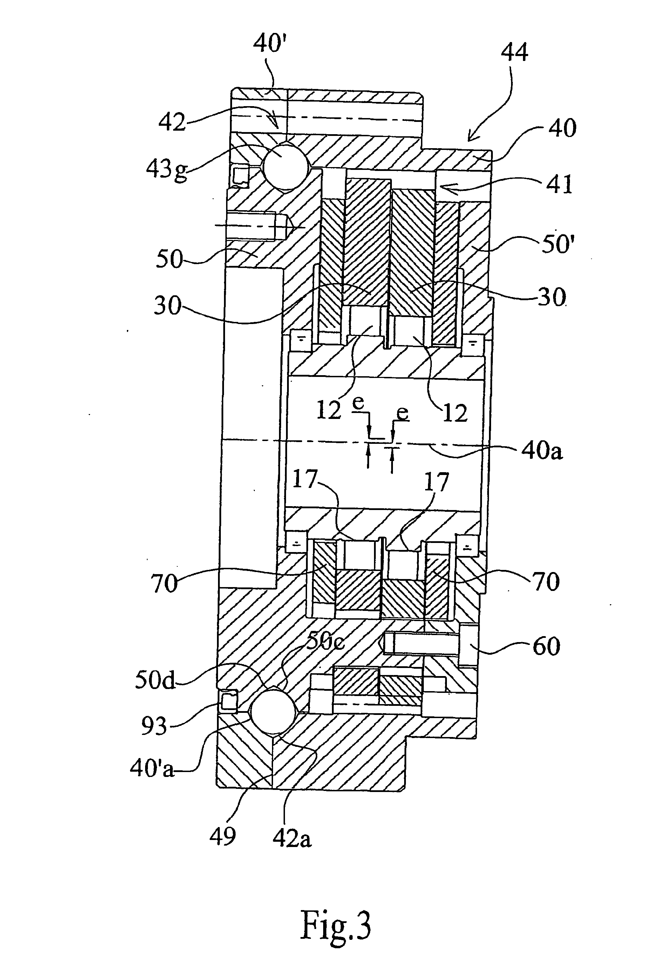

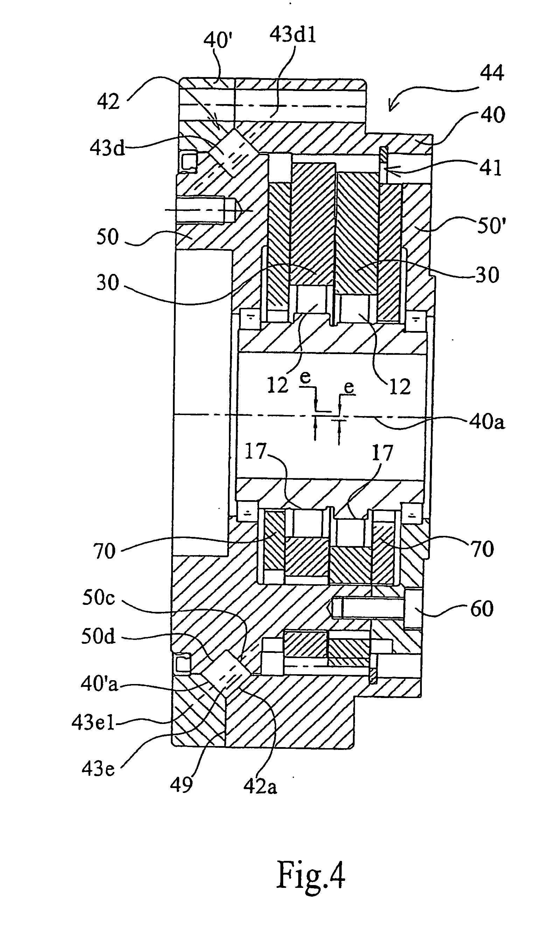

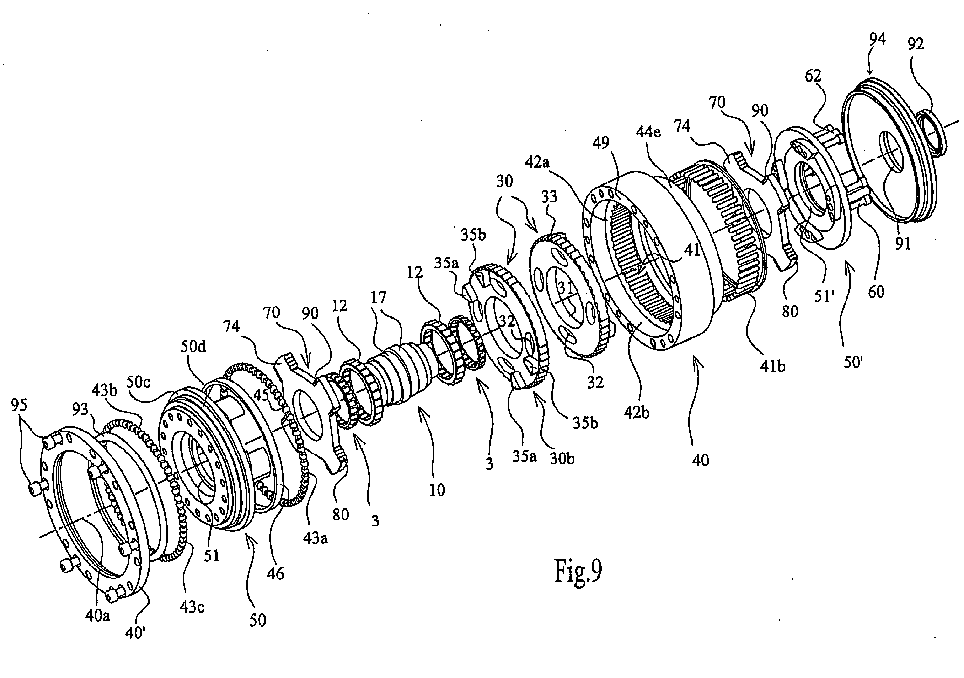

Die in den Fig. 1 bis 9 vollständig oder teilweise dargestellten Getriebe bestehen alle aus einem eine Innenverzahnung 41 sowie eine Drehachse 40a aufweisenden hohlzylinderartigen Grundkörper 40 mit Stirnseiten 49, in dem ein angetriebenes Eingangsorgan 10 sowie ein Ausgangsorgan drehbar gelagert sind. Das Ausgangsorgan umfasst zwei Drehkörper 50, 50'. Die Drehkörper sind im Wesentlichen scheibenförmig ausgebildet. Die scheibenförmigen Partien der Drehkörper 50, 50'sind mit Abstand zueinander angeordnet. Die Drehkörper 50, 50' sind fest miteinander verbindbar bzw. verbunden. Die Drehkörper 50, 50' weisen quer zur Drehachse 40a einen kreisrunden Querschnitt auf. Zwischen den Drehkörpern 50, 50' sind zwei Zahnräder 30 angeordnet. Die Zahnräder 30 kämmen mit ihren Außenverzahnungen 33 mit der Innenverzahnung 41 des Grundkörpers 40. Zwischen den Drehkörpern 50, 50' sind außerdem Mittel zur Umwandlung von Planetenbewegungen der Zahnräder 30 in Rotationsbewegungen des Ausgangsorgans angeordnet. Bei den in den Fig. 1 bis 9 dargestellten Getrieben ist jeweils nur einer der beiden Drehkörper 50, 50', nämlich der Drehkörper 50, unmittelbar im Grundkörper 40 gelagert. Darüber hinaus ist ein mit der Stirnseite 49 fest verbindbarer, ringartiger Haltekörper 40' vorgesehen. Der Drehkörper 50 stützt sich über Wälzelemente 43a, 43b, 43c (Fig. 1 und 9) bzw. 43a, 43r (Fig. 2) bzw. 43g (Fig. 3) 43d, 43e (Fig. 4) sowohl in axialer, als auch in radialer Richtung unmittelbar am Grundkörper 40 und am an der Stirnseite 49 angeordneten Haltekörper 40' ab.

Der funktionale Aufbau der zwischen den Drehkörpern 50, 50' in dem Grundkörper 40 angeordneten, beweglichen Teile ist dabei in allen in den Fig. 1 bis 9 dargestellten Ausführungsbeispielen identisch. Ein Eingangsorgan 10 in Form einer Eingangswelle weist zwei exzentrische Abschnitte 17 auf, die um 180° gegeneinander versetzt angeordnet sind. Die exzentrischen Abschnitte 17 sind um eine Exzentrizität e gegenüber der Drehachse 40a versetzt. Auf jedem der exzentrischen Abschnitte 17 ist ein Zahnrad 30 drehbar gelagert. Die Exzentrizität e entspricht somit dem Abstand zwischen der Achse 30a des Zahnrades 30 und der Drehachse 40a des Grundkörpers 40. Zwischen den exzentrischen Abschnitten 17 und den Zahnrädern 30 sind zur Verringerung der Reibungsverluste Wälzelemente 12 angeordnet, welche jeweils am Außenumfang der exzentrischen Abschnitte 17 abrollen. Hierzu sind am Umfang der exzentrischen Abschnitte 17 Laufbahnen für die Wälzelemente 12 ausgebildet, die als Lagerkörper für die Zahnräder 30 dienen. Die Zahnräder 30 weisen Außenverzahnungen 33 und zentrale Öffnungen mit inneren Laufflächen 31 für die Wälzkörper 12 auf.

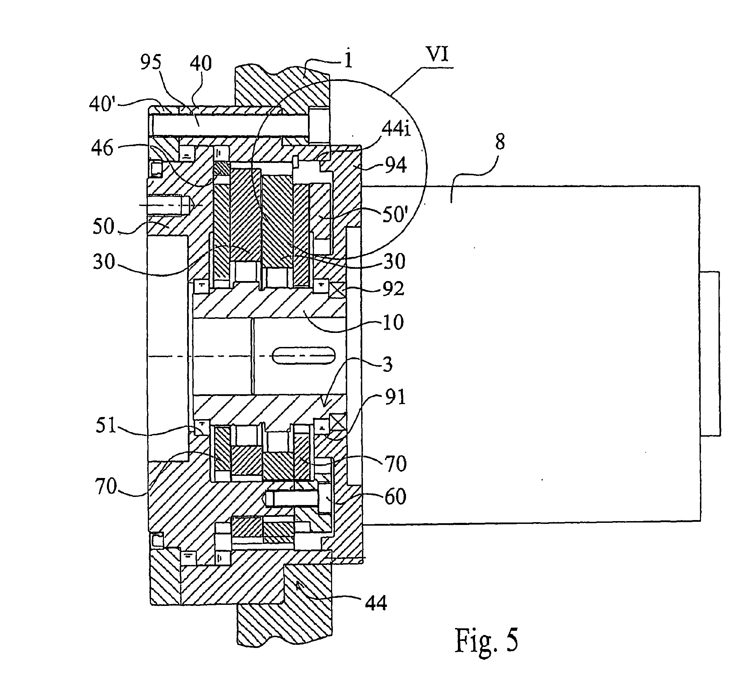

Die Zahnräder 30 haben mehrere, in radialer Richtung zur inneren Lauffläche 31 aufweisenden zentralen Öffnung versetzt angeordnete, durchgehende axiale Öffnungen 32, die jeweils gleichmäßig um die Achsen 30a der Zahnräder 30 verteilt sind. Die Achsen 30a der Zahnräder 30 verlaufen parallel zur Drehachse 40a des Eingangsorgans 10 und eines durch zwei Drehkörper 50, 50' gebildeten Ausgangsorgans. Die Drehachse 40a ist gleichzeitig die Symmetrieachse des Grundkörpers 40. Das Eingangsorgan 10 ist, wie in Fig. 5 dargestellt, mittels einer nicht näher dargestellten Feder mit einer Motorwelle eines Antriebsmotors 8 verbunden. Der Antriebsmotor 8 ist mit dem als Hohlrad ausgebildeten Grundkörper 40 mit Innenverzahnung 41 mittels eines Deckels 94 und nicht dargestellten Schrauben verbunden. Der Antriebsmotor 8 ist auf der dem im Grundkörper 40 gelagerten Drehkörper 50 abgewandten Seite des Getriebes angeordnet. Diese Seite bildet die Antriebsseite, wohingegen der im Grundkörper 40 gelagerte Drehkörper 50 die Abtriebseite des Getriebes bildet.

Die Zahnräder 30 sind in der Mitte zwischen den zwei mit kreisrunder Außenkontur bzw. mit einem quer zur Drehachse 40a kreisrunden Querschnitt ausgebildeten Drehkörpern 50, 50' angeordnet, die durch Verbindungselemente 60, 62 lösbar miteinander verbunden sind und gemeinsam das Ausgangsorgan des Getriebes bilden. Am Drehkörper 50 sind Distanzkörper 52 angeordnet, welche Öffnungen 53a, 53b und Gewindeaufnahmen 59a, 59b zur Aufnahme der Verbindungselemente 60, 62 aufweisen. Die Distanzkörper 52 durchqueren berührungsfrei die Öffnungen 32 der Zahnräder 30, so dass die Drehkörper 50, 50' durch die Zahnräder 30 hindurch fest miteinander verbindbar sind. Das durch die beiden miteinander verbundenen Drehkörper 50, 50' gebildete Ausgangsorgan ist in Bezug auf den Grundkörper 40 mit Innenverzahnung 41 um die Drehachse 40a drehbar gelagert.

Die Innenverzahnung 41 des Grundkörpers 40 kämmt mit der Außenverzahnung der Zahnräder 30. Die Achsen der Zahnräder 30 sind parallel zur Drehachse 40a des Grundkörpers 40 angeordnet, jedoch um die Exzentrizität e versetzt. Die Drehkörper 50, 50' sind mit Führungsbahnen 54a, 54b versehen, die eine Linearführung 50b definieren. Die Linearführung 50b ist quer zur Drehachse 40a der Drehkörper 50, 50' orientiert. Jedes Zahnrad 30 ist mit Führungsbahnen 34a, 34b versehen, die eine Linearführung 30b definieren, wobei diese Linearführung 30b quer zur Achse 30a des Zahnrades 30 orientiert ist. An beiden Seiten des Getriebes ist zwischen dem Drehkörper 50 bzw. 50' und dem Zahnrad 30 ein als Kreuz ausgebildetes Transformationselement 70 angeordnet. Das Transformationselement 70 besitzt in zwei orthogonal zueinander angeordneten Richtungen Führungsflächen 74a, 74b bzw. 75a, 75b, die mit den Linearführungen 50b und 30b des jeweiligen Drehkörpers 50, 50' bzw. des Zahnrads 30 derart korrespondieren, dass das Transformationselement 70 gegenüber dem jeweiligen Drehkörper 50, 50' einerseits und gegenüber dem Zahnrad 30 andererseits in zwei senkrecht zueinander verlaufenden Richtungen verschieblich angeordnet ist. Die eine Linearführung 50b ist am Drehkörper 50 bzw. 50' ausgebildet, während das Transformationselement 70 in der anderen Richtung in der Linearführung 30b am Zahnrad 30 verschieblich angeordnet ist.

Beide Drehkörper 50, 50' sowie die Transformationselemente 70 besitzen zentrale Öffnungen 51, 51' bzw. 71. Das Eingangsorgan 10 ist an seinen beiden Enden in den zentralen Öffnungen 51, 51' der Drehkörper 50, 50' gelagert. Die zentralen Öffnungen 51, 51' bilden an ihren Innenflächen Laufbahnen für Lagerkörper 3. Mittels der Lagerkörper 3 sind die Enden des Eingangsorgans 10 in den zentralen Öffnungen 51, 51' der Drehkörper 50, 50' gelagert. Das Eingangsorgan 10 durchquert kontaktfrei die Öffnung 71 des Transformationselements 70. Der Innendurchmesser der Öffnung 71 ist hierbei um mindestens 2e größer als der Außendurchmesser desjenigen Abschnitts des Eingangsorgans 10, welcher die Öffnung 71 durchquert. Die Führungsbahnen 54a und 54b, mit denen jeder Drehkörper 50, 50' versehen ist, sind an den einander gegenüberliegenden Seiten der Vorsprünge 55a und 55b ausgebildet. Die Vorsprünge 55a und 55b sind als achsensymmetrische Paare ausgebildet und an der Stirnseite des jeweiligen Drehkörpers 50, 50' angeordnet. Die Führungsbahnen 54a und 54b sind direkt an den Vorsprüngen 55a und 55b der Drehkörper 50, 50' ausgebildet. Sie können auch als flache Leisten ausgebildet sein, die an den gegenüberliegenden Seiten der Vorsprünge 55a, 55b befestigt sein können.

Die Führungsbahnen 34a, 34b, mit denen jedes Zahnrad 30 versehen ist, sind an den einander gegenüberliegenden Seiten der Vorsprünge 35a, 35b ausgebildet. Sie sind durch mittig gegenüberliegende Paare gebildet, die an der Stirnseite des Zahnrades 30 ausgebildet sind. Die axialen Öffnungen 32 des Zahnrades 30 sind auf einem Kreisbogen gleichmäßig verteilt zwischen den Vorsprüngen 35a, 35b angeordnet. Die Führungsbahnen 34a, 34b sind direkt an den Vorsprüngen 35a, 35b des Zahnrades 30 ausgebildet. Sie können jedoch auch als flache Leisten ausgebildet sein, die fest an den gegenüberliegenden Seiten der Vorsprüngen 35a, 35b ausgebildet sind.

Das Transformationselement 70 umfasst eine ringförmige, zentrale Partie 73 sowie vier an der ringförmigen, zentralen Partie 73 angeordnete Arme 74. In der ringförmigen zentralen Partie 73 ist eine Öffnung 71 angeordnet, durch die das Eingangsorgan berührungsfrei hindurchgeführt ist. Das eine Paar gegenüberliegender Arme 74 weist Führungsbahnen 75a, 75b auf, durch die das Transformationselement 70 in der Linearführung 50b des Drehkörpers 50 verschieblich angeordnet ist. Das zweite Paar gegenüberliegender Arme 74 weist ebenfalls parallele Führungsbahnen 74a, 74b auf, durch welche das Transformationselement 70 in der Linearführung 30b des Zahnrades 30 verschieblich angeordnet ist. Zwischen den Führungsbahnen 54a und 54b der Linearführung 50b des Drehkörpers 50 und den Führungsbahnen 75a, 75b des Transformationselements 70, durch welche das Transformationselement 70 in der linearen Führung 50b verschieblich angeordnet ist, sind zylindrische Wälzelemente 80 angeordnet. Zwischen den Führungsbahnen 34a und 34b der Linearführung 30b am Zahnrad 30 und den Führungsbahnen 74a, 74b des Transformationselements 70, durch welche das Transformationselement 70 in der Linearführung 30b verschieblich angeordnet ist, sind ebenfalls zylindrische Wälzelemente 90 angeordnet. In beiden Fällen ist eine Führung des Transformationselements 70 mittels Wälzelementen 80, 90 gewährleistet, wenn es gegenüber dem Zahnrad 30 sowie gegenüber dem Drehkörper 50 und der Drehachse 40a Oszillationsbewegungen ausübt. An den Armen 74 des Transformationselements 70 sind zur Begrenzung der Führungsbahnen 74a, 74b, 75a, 75b Grenzflächen 76, 76' ausgebildet, die die Bewegung der Wälzelemente 80, 90 begrenzen.

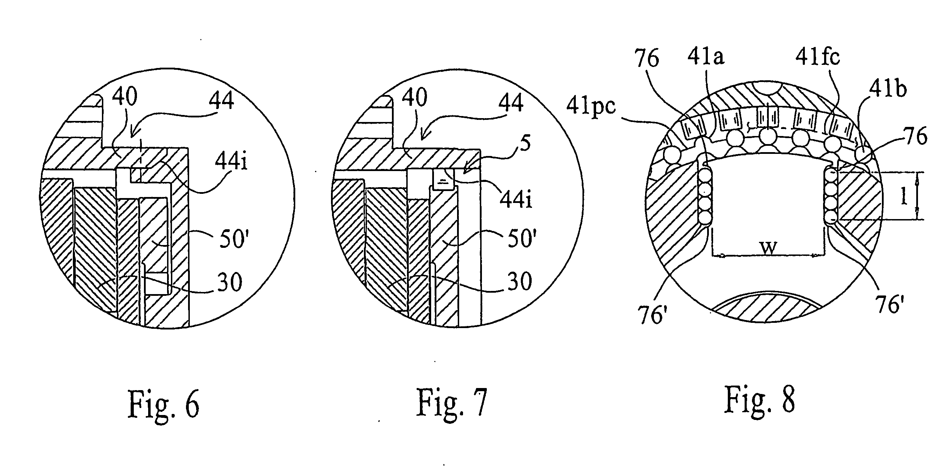

In Fig. 8 ist hierzu im Detail dargestellt, wie die Wälzelemente 80, 90 zwischen den an den Armen 74 ausgebildeten Führungsbahnen 74a, 74b bzw. 75a, 75b in montiertem Zustand angeordnet sind. Die Grenzflächen 76, 76' begrenzen die effektive Länge I der Führungsbahnen 74a, 74b bzw. 75a, 75b an den Armen 74, entlang denen sich die Wälzelemente 80, 90 bewegen können. w gibt die Breite eines Arms 74 an. In Fig. 8 ist darüber hinaus zu erkennen, dass der Innenkreis 41pc der Innenverzahnung 41 durch die Symmetrieachsen der in den Axialnuten 41a angeordneten nadelförmigen Wälzkörper 41 b verläuft. Der Außenkreis 41fc der Innenverzahnung 41 verläuft durch den Grund der Axialnuten 41a.

Die Innenverzahnung 41 des Grundkörpers 40 besteht aus nadelförmigen Wälzkörpern 41 b, die in Axialnuten 41 a am Innenumfang des Grundkörpers 40 gelagert sind. Die Axialnuten 41 a sind am Innenumfang des Grundkörpers 40 gleichmäßig verteilt. Es handelt sich somit um Zahnräder, deren Zähne vorzugsweise aus liegenden Zylindern bestehen. Die Außenverzahnung 33 des Zahnrades 30 ist entsprechend wellenförmig ausgebildet.

An den Vorsprüngen 55a und 55b des Drehkörpers 50 sind die Distanzkörper 52 angeordnet. Diese Distanzkörper 52 durchqueren mit Spiel die axialen Öffnungen 32 des Zahnrades 30, wobei sie mit axialen Aufnahmen 53a, 53b sowie Gewindeaufnahmen 59a, 59b versehen sind. Die Aufnahmen 53a, 53b und die Gewindeaufnahmen 59a, 59b sind zur Aufnahme der Verbindungselemente 60, 62 vorgesehen. Die Verbindungselemente sind als Stifte 62 und Schrauben 60 ausgebildet (Fig. 9). Durch Anziehen der als Schrauben 60 ausgeführten Verbindungselemente 60 definieren die Stirnseiten der Distanzkörper 52 die Lage der beiden Drehkörper 50, 50'.

Im Gegensatz zum nicht unmittelbar am Grundkörper 40 gelagerten Drehkörper 50' ist der Drehkörper 50 unmittelbar durch Lagermittel sowohl gegenüber dem Grundkörper 40 radial in Richtung normal zur Drehachse 40a, als auch gegenüber dem Grundkörper 40 und dem Haltekörper 40' axial in Richtung der Drehachse 40a abgestützt. Die Lagermittel umfassen eine unmittelbare Wälzlagerung 42 des Drehkörpers 50 im Grundkörper 40. An der Stirnseite 49 des Grundkörpers 40 sind Öffnungen 47 für Befestigungsmittel 95 angeordnet, mit denen der Haltekörper 40' am Grundkörper 40 befestigbar ist.

Die Wälzlagerung 42 ist bei dem in den Fig. 1, 1a, 1b, 1c, 5 und 9 dargestellten Getriebe durch zylinderförmige Wälzelemente 43a, 43b, 43c gebildet, die auf an dem Grundkörper 40, dem Drehkörper 50 und dem Haltekörper 40' ausgebildeten um die Drehachse 40a geschlossen umlaufenden Laufflächen 42a, 42b, 50c, 50d, 40'a abrollen.

Die Wälzelemente 43a sind zwischen der Lauffläche 42a und der der Innenverzahnung 41 zugewandten Lauffläche 50c des Drehkörpers 50 angeordnet. Die Lauffläche 42a bildet einen ringförmigen, stufenförmigen Absatz, der senkrecht zur Drehachse 40a in etwa bündig mit der Innenverzahnung 41 abschließt. Die Lauffläche 50c, auf dem die Wälzelemente 43a unmittelbar am Drehkörper 50 abrollen, ist der äußere Ring der der Innenverzahnung zugewandten, normal zur Drehachse 40a verlaufenden Fläche des Drehkörpers 50. Die Achsen 43a1 der zylinderförmigen Wälzelemente 43a verlaufen dabei senkrecht zur Drehachse 40a des Drehkörpers 50.

Die Wälzelemente 43b sind zwischen der Lauffläche 40'a und der der Innenverzahnung 41 abgewandten Lauffläche 50c des Drehkörpers 50 angeordnet. Die Lauffläche 40'a ist der innere Ring der dem Drehkörper 50 zugewandten, planen Fläche des Haltekörpers 40', die normal zur Drehachse 40a verläuft. Die Lauffläche 50c, auf dem die Wälzelemente 43b am Drehkörper 50 abrollen, ist eine ringförmige Fläche normal zur Drehachse 40a eines stufenförmigen Absatzes an der der Innenverzahnung abgewandten Seite des Drehkörpers 50. Die Achsen 43b1 der zylinderförmigen Wälzelemente 43b verlaufen ebenfalls senkrecht zur Drehachse 40a des Drehkörpers 50.

Die Wälzelemente 43a und 43b stützen den Drehkörper 50 unmittelbar gegenüber dem Grundkörper 40 und gegenüber dem Haltekörper 40' in beiden axialen Richtungen ab.

Die Wälzelemente 43c sind zwischen der um die Drehachse 40a verlaufenden Lauffläche 42b und der auf der der Innenverzahnung 41 abgewandten Seite des Drehkörpers 50 angeordneten, ebenfalls um die Drehachse 40a verlaufenden Lauffläche 50d des Drehkörpers 50 angeordnet. Die Lauffläche 42b ist eine sich in axialer Richtung parallel zur Drehachse 40a erstreckende Zylinder-Innenmantelfläche auf der dem Drehkörper 50 zugewandten Innenseite des Grundkörpers 40. Die Lauffläche 50d wird von einer Zylinder-Außenmantelfläche gebildet, die durch einen auf der der Innenverzahnung 41 abgewandten Seite des Drehkörpers angeordneten Absatz am Drehkörper gebildet ist. Die Achsen 43c1 der zylinderförmigen Wälzelemente 43c verlaufen parallel zur Drehachse 40a des Drehkörpers 50. Die Wälzelemente 43c stützen den Drehkörper 50 gegenüber dem Grundkörper 40 in radialer Richtung ab.

Die Wälzelemente 43a sind in einem Lagerkäfig 45 angeordnet. Grundsätzlich ist denkbar, dass alle Wälzelemente 43a, 43b, 43c in Lagerkäfigen angeordnet werden, welche die Wälzelemente 43a, 43b, 43c voneinander beabstanden, so dass es zu keinen Reibungsverlusten zwischen ihnen kommen kann.

Für die Wälzelemente 43a, 43b, 43c können herkömmliche, bewährte und in Massenproduktion mit hoher Präzision herstellbare Teile, nämlich zylinderförmige Wälzkörper eingesetzt werden, die keiner Individualisierung bedürfen.

Zur Gewichtsverringerung weist das Eingangsorgan 10 eine koaxial zur Drehachse 40a verlaufende durchgehende Öffnung 4 auf. Diese Öffnung 4 kann gleichzeitig wie in Fig. 5 angedeutet, zur Aufnahme und/oder Verbindung mit einer Antriebswelle eines Antriebsmotors 8 dienen.

Bei dem in den Fig. 1, 1 a, 1b, 1 c, 5 und 9 dargestellten Getriebe sind die zylinderförmigen Wälzelemente 43a radial nach außen versetzt im Bereich des Transformationselements 70 angeordnet. Hierdurch wird eine besonders raumsparende Bauweise erreicht, welche insbesondere in axialer Richtung besonders kurze und kompakte Abmessungen aufweist. Da sich auf Höhe der zylinderförmigen Wälzelemente 43a radial nach innen versetzt das Transformationselement 70 befindet, welches keine reine Rotationsbewegung um die Drehachse 40a ausführt, sondern eine Kombination aus Rotationsbewegung um die Drehachse 40a und Linearbewegungen normal zur Drehachse 40a, können die zylinderförmigen Wälzelemente 43a nicht vom Transformationselement 70 auf ihren Positionen am Innenumfang des Grundkörpers 40 gehalten werden. Hierzu ist ein zwischen Drehkörper 50 und Zahnrad 30 angeordneter, ringförmiger Trägerkörper 46 vorgesehen, der die zylinderförmigen Wälzelemente 43a in ihren Positionen hält. Darüber hinaus sind die zylinderförmigen Wälzelemente 43a in einem Lagerkäfig angeordnet. Eine weitere Besonderheit des in den Fig. 1, 1 a, 1b, 1 c, 5 und 9 dargestellten Getriebes ist, dass die zylinderförmigen Wälzelemente 43b und 43c, die den Drehkörper in radialer Richtung sowie in umgekehrter axialer Richtung, wie die zylinderförmigen Wälzelemente 43a abstützen, in einem gemeinsamen, durch die Laufflächen 40'a, 42b, 50c und 50d begrenzten Ringraum angeordnet sind.

In Fig.1A weist das Getriebe ein Vorschaltgetriebe auf. Das Eingangsorgan 10 arbeitet mit einem Zahnrad 10a zusammen. Die Innenverzahnung 10a' arbeitet mit der Außenverzahnung10b'des Zahnrades10b zusammen. Dabei ist der Durchmesser des Innenzahnrades kleiner als der Durchmesser der kreisrunden und durchgehenden Öffnung 4. Der Abstand k zwischen der Achse 40a und der Achse des Rades 10b ist kleiner als der Radius der Öffnung 4. Wird das Zahnrad 10b mit der Antriebswelle eines Motors verbunden, dann ist die Anpassung an die Achse des Getriebes minimal, was die Installation des Motors vereinfacht. Hierfür wird auch der Innenraum des Eingangsorgans 10 genutzt, so dass die Außenmaße des Getriebes wegen dem Vorschlaggetriebe nur unwesentlich verändert werden müssen

Bei dem in den Fig. 2 und 2a dargestellten Getriebe handelt es sich um eine robustere Ausführung, als bei dem in den Fig. 1, 1a, 1b, 1c, 5 und 9 dargestellten Getriebe. Dies wird zum einen dadurch erreicht, dass sowohl in einem durch Laufflächen 40'a, 42b, 50c und 50d begrenzten ersten Ringraum, als auch in einem durch Laufflächen 42a, 42b, 50c und 50d begrenzten zweiten Ringraum jeweils sowohl zylinderförmige Wälzelemente 43r zur unmittelbaren radialen Abstützung des Drehkörpers 50 am Grundkörper 40, als auch zylinderförmige Wälzelemente 43a zur unmittelbaren axialen Abstützung des Drehkörpers 50 am Grundkörper 40 sowie am Haltekörper 40' angeordnet sind. Die Funktion der Wälzelemente 43r entspricht dabei derjenigen der Wälzelemente 43c in den Fig. 1, 1a, 1b, 1c, 5 und 9. Die Achsen der zylinderförmige Wälzelemente 43a verlaufen dabei senkrecht zur Drehachse 40a, wohingegen die Achsen der zylinderförmige Wälzelemente 43r parallel zur Drehachse 40a verlaufen. Beide Ringräume sind durch einen gemeinsamen, durch die Laufflächen 42a und 42b gebildeten stufenförmigen Absatz, der um die Breite des Transformationselements 70 von der Innenverzahnung 41 des Grundkörpers 40 beabstandet ist, begrenzt. Hierdurch sind die Wälzelemente 43a zur unmittelbaren Abstützung des Drehkörpers 50 am Grundkörper 40 sowie am Haltekörper 40' gegenüber in axialer Richtung verlaufender Kräfte gegenüber dem auf der selben Seite der Innenverzahnung 41 wie der Drehkörper 50 angeordneten Transformationselement 70 in Richtung der Drehachse 40a weg von der Innenverzahnung 41 versetzt angeordnet. Ein sich hieraus ergebender Vorteil ist, dass, indem die die Lagermittel bildenden Wälzkörper axial versetzt und nach außen verlagert gegenüber den zwischen den Drehkörpern 50, 50' angeordneten Teilen angeordnet werden, wodurch sich eine Vergrößerung des für die beweglichen Teile zwischen den Drehkörpern 50, 50' zur Verfügung stehenden Innenraumes ergibt. Hierdurch kann das Getriebe bei gleichem Außendurchmesser bzw. bei gleichen Außenabmessungen robuster ausgeführt werden, da den Transformationselementen 70 im Grundkörper 40 ein größerer Bauraum in radialer Richtung zur Verfügung steht.

Bei dem in Fig. 3 dargestellten Getriebe werden anstelle von zylinderförmigen Wälzelementen 43a, 43b, 43c, 43r kugelförmige Wälzelemente 43g verwendet, die in einem entsprechend geformten und durch den Haltekörper 40', den Grundkörper 40, sowie den Drehkörper 50 begrenzten Ringraum angeordnet sind. Die kugelförmigen Wälzelemente 43g sind in Verbindung mit dem entsprechend geformten Ringraum in der Lage, den Drehkörper 50 sowohl in axialer, als auch in radialer Richtung unmittelbar am Grundkörper 40 sowie am Haltekörper 40' abzustützen. Der Ringraum wird begrenzt durch konkav gewölbte, um die Drehachse geschlossen umlaufende Laufflächen 40'a, 42a, 50c, 50d. Die Laufflächen 40'a, 42a, 50c, 50d sind hierbei um jeweils etwa 45° gegenüber der Drehachse 40 geneigt angeordnet. Die Lauffläche 40'a ist bei der vorliegenden Ausgestaltung demnach eine schräg zur Drehachse 40a und zur Innenverzahnung 41 hin gerichtete, konkave Fläche am Haltekörper 40'. Die Lauffläche 42a ist bei der vorliegenden Ausgestaltung demnach eine schräg zur Drehachse 40a hin und von der Innenverzahnung 41 weg gerichtete, konkave Fläche am Grundkörper 40. Die Lauffläche 50c ist bei der vorliegenden Ausgestaltung demnach eine schräg von der Drehachse 40a und von der Innenverzahnung 41 weg gerichtete, konkave Fläche am Drehkörper 50. Die Lauffläche 50d ist bei der vorliegenden Ausgestaltung demnach eine schräg von der Drehachse 40a weg und zum Grundkörper 40 hin gerichtete, konkave Fläche am Drehkörper 50. Ein sich aus dieser Ausgestaltung ergebender Vorteil ist, dass nur ein einziger Ringraum erforderlich ist, um sämtliche auf den Drehkörper 50 einwirkenden Axial- und Radialkräfte über gemeinsame Wälzelemente 43g unmittelbar auf den Grundkörper 40 und den mit dem Grundkörper 40 über die Befestigungsmittel 95 verbundenen Haltekörper 40' zu übertragen.

Bei dem in Fig. 4 dargestellten Getriebe sind zur unmittelbaren Abstützung des Drehkörpers 50 sowohl in axialer, als auch in radialer Richtung gegenüber dem Grundkörper 40 und dem Haltekörper 40' zylinderförmige Wälzelemente 43d, 43e vorgesehen. Die Wälzelemente 43d, 43e sind in einem um 45° gegenüber der Drehachse 40a geneigten, einen quadratischen Querschnitt aufweisenden, um die Drehachse 40a umlaufenden Ringraum angeordnet. Die Achsen 43d1 und 43e1 der Wälzelemente 43d und 43e sind dabei in entgegen gesetzten Richtungen um jeweils 45° gegenüber der Drehachse 40a geneigt. Der Ringraum ist durch Haltekörper 40', den Grundkörper 40, sowie den Drehkörper 50 begrenzt. Am Haltekörper 40', am Grundkörper 40 und am Drehkörper 50 sind jeweils um die Drehachse geschlossen umlaufende, den Ringraum bildende Laufflächen 40'a, 42a, 50c, 50d angeordnet. Die Lauffläche 40'a ist bei der vorliegenden Ausgestaltung demnach eine um 45° schräg gegenüber der Drehachse 40a, zur Drehachse 40a und zur Innenverzahnung 41 hin gerichtete, ebene Fläche am Haltekörper 40'. Die Lauffläche 42a ist bei der vorliegenden Ausgestaltung demnach eine um 45° schräg gegenüber der Drehachse 40a, zur Drehachse 40a hin und von der Innenverzahnung 41 weg gerichtete, ebene Fläche am Grundkörper 40. Die Lauffläche 50c ist bei der vorliegenden Ausgestaltung demnach eine um 45° schräg gegenüber der Drehachse 40a, von der Drehachse 40a und von der Innenverzahnung 41 weg gerichtete, ebene Fläche am Drehkörper 50. Die Lauffläche 50d ist bei der vorliegenden Ausgestaltung demnach eine um 45° schräg gegenüber der Drehachse 40a, von der Drehachse 40a weg und zum Grundkörper 40 hin gerichtete, ebene Fläche am Drehkörper 50. Ein sich aus dieser Ausgestaltung ergebender Vorteil ist, dass nur ein einziger Ringraum erforderlich ist, um sämtliche auf den Drehkörper 50 einwirkenden Axial- und Radialkräfte über Wälzelemente 43d, 43e unmittelbar auf den Grundkörper 40 und den mit dem Grundkörper 40 über die Befestigungsmittel 95 verbundenen Haltekörper 40' zu übertragen. Ein Vorteil gegenüber der Ausgestaltung nach Fig. 3 ist, dass die zylinderförmigen Wälzelemente 43d, 43e im Gegensatz zu den kugelförmigen Wälzelementen 43g höhere Belastungen ertragen, da sie nicht punktförmig, sondern linienförmig auf den jeweils zugeordneten Laufflächen aufliegen.

Eine weitere Ausgestaltung eines nicht beanspruchten Getriebes ist in den Fig. 5 und 9 dargestellt. Bei dem Getriebe ist auf der Antriebsseite, auf der in Fig. 5 ein mit seiner Motorwelle mit dem Eingangsorgan 10 verbundener Antriebsmotor 8 angeordnet ist, ein Deckel 94 vorgesehen, der die beweglichen Teile im Inneren des Getriebes vor Verschmutzung schützt.

Der Deckel 94 weist dabei einen Absatz auf, der durch eine stufenförmige Verjüngung an seinem Außenumfang gebildet wird. Diese stufenförmige Verjüngung passt formschlüssig in den Innendurchmesser des Grundkörpers 40. Der Deckel 94 schließt an seinem Außenumfang bündig mit dem Außenumfang des Grundkörpers 40 ab. Der Deckel 94 weist eine zentrale Öffnung auf, durch die das Eingangsorgan 10 geführt ist. Zwischen Deckel 94 und Eingangsorgan 10 ist dabei eine umlaufende Dichtung 92 angeordnet, um das Eindringen von Verunreinigungen zu unterbinden.

Ebenso kann, wie in Fig. 9 dargestellt, zwischen Drehkörper 50 und Haltekörper 40' eine umlaufende Dichtung 93 vorgesehen sein, die das Eindringen von Verunreinigungen in das Getriebe auf der Abtriebseite unterbindet.

An der Zentralen Öffnung im Deckel 94 kann darüber hinaus wie in Fig. 5 und 9 dargestellt, eine Lauffläche 91 für die Lagerkörper 3 ausgebildet sein, mit denen das Eingangsorgan 10 anstelle am ungelagerten bzw. nicht unmittelbar am Grundkörper 40 gelagerten Drehkörper 50', wie in den Fig. 1 bis 4 vorgesehen, am Deckel 94 gelagert ist. Bei diesem Ausführungsbeispiel stützt sich das Eingangsorgan 10 über die Lagerkörper 3 anstelle von am ungelagerten bzw. nicht unmittelbar am Grundkörper 40 gelagerten Drehkörper 50' am mit dem Grundkörper 40 verbundenen Deckel 94 ab. Hierdurch wird sichergestellt, dass keine Axialkräfte auf den ungelagerten bzw. nicht unmittelbar am Grundkörper 40 gelagerten Drehkörper 50' einwirken, wodurch ebenfalls sichergestellt ist, dass die die beiden Drehkörper 50, 50' miteinander verbindenden Verbindungselemente 60, 62 keine äußeren bzw. durch äußere Einwirkungen entstehenden Axialkräfte zwischen den Drehkörpern 50, 50' übertragen müssen.

Allen in den Ausführungsbeispielen beschriebenen Getrieben ist gemein, dass sie eine stufenartige Verjüngung des Grundkörpers 40 in Form der Stufe 44 aufweisen. Diese Stufe 44 dient zur Befestigung des Getriebes an einem Gestell 1. Dank der Stufe 44 können die Befestigungsmittel 95 zur Befestigung des Haltekörpers 40' am Grundkörper 40 gleichzeitig zur Befestigung des Getriebes an dem Gestell 1 dienen. Die Stufe 44 wird durch eine äußere Stirnseite 44a sowie eine umlaufende Mantelfläche 44e gebildet. Innen am Grundkörper 40 auf der der Stufe 44 zugewandten Seite des Getriebes ist eine innere Zentrierfläche 44i zur Zentrierung eines Deckels 94 vorgesehen.

Die Zentrierfläche 44i kann dabei wie in den Fig. 6 und 7 dargestellt ausgebildet sein. In Fig. 6 ist die innere Zentrierfläche 44i als Phase an der inneren Mantelfläche des Grundkörpers 40 ausgebildet. Hierdurch kann der Deckel 94 besonders einfach, da selbstzentrierend, auf den Grundkörper 40 aufgesetzt werden. In Fig. 7 ist die Zentrierfläche 44i als zylinderförmige Innenfläche ausgebildet, welche gleichzeitig als Laufbahn für Radiallagerkörper 5 dienen kann, die den hinteren Drehkörper 50', gegenüber dem Grundkörper 40 in radialer Richtung führen. Wichtig ist hierbei, dass die Radiallagerkörper 5 in Richtung der Drehachse 40a frei verschiebbar sind, also keine Axialkräfte aufnahmen und übertragen können. Hierdurch wird sichergestellt, dass die Verbindungselemente 60, 62 keine äußeren bzw. durch äußere Einwirkungen entstehenden Axialkräfte zwischen den Drehkörpern 50, 50' übertragen müssen.

Wichtig ist hervorzuheben, dass das erfindungsgemäße Getriebe auch nur mit einem Zahnrad 30, einem Transformationselement 70 und zwei Drehkörpern 50, 50' ausgeführt werden kann. Um in diesem Fall die Umwucht des Transformationselements 70 auszugleichen, kann ein Gegengewicht vorgesehen sein.

Ebenso wichtig ist hervorzuheben, dass bei dem Getriebe grundsätzlich nach Belieben das Eingangsorgan, das Ausgangsorgan oder der Grundkörper Antriebseite, Abtriebseite oder fest stehendes Element sein können, ohne dass die prinzipielle Funktion des Getriebes beeinträchtigt wird. Lediglich das Übersetzungsverhältnis verändert sich hierdurch. Bei den in den Fig. 1 bis 9 dargestellten Ausführungsbeispielen ist jeweils das Eingangsorgan 10 zum Antrieb durch einen Antriebsmotor 8 vorgesehen, wobei die Antriebsseite vorzugsweise diejenige Seite des Getriebes ist, auf der der ungelagerte bzw. nicht unmittelbar am Grundkörper 40 gelagerte Drehkörper 50' angeordnet ist. Die Abtriebsseite wird durch den im Grundkörper 40 unmittelbar gelagerten Drehkörper 50 gebildet. Erfahrungsgemäß sind die Belastungen auf der Abtriebseite größer, als auf der Antriebsseite, weshalb es vorteilhaft ist, die Abtriebsseite am unmittelbar gelagerten Drehkörper 50 auszubilden.

Die wesentlichen Merkmale und Vorteile des vorgeschlagenen Getriebes bestehen darin, dass nur der unmittelbar am Grundkörper 40 gelagerte Drehkörper 50 praktisch allen Kräften ausgesetzt ist, die auf das Getriebe oder innerhalb des Getriebes durch Einwirkung äußerer Belastungen oder Kräfte wirken. Der ungelagerte bzw. nicht unmittelbar am Grundkörper 40 gelagerte Drehkörper 50' ist lediglich inneren statischen Kräften ausgesetzt, die von den Verbindungselementen herrühren. Der unmittelbar gelagerte Drehkörper 50 bildet regelmäßig die belastete Arbeitsseite des Getriebes. Die dabei entstehenden Kräfte und Belastungen werden jedoch nicht auf den ungelagerten bzw. nicht unmittelbar am Grundkörper 40 gelagerten Drehkörper 50' übertragen. Somit können auch die vorzugsweise als Schrauben ausgebildeten Verbindungselemente einfacher gestaltet werden. Denn sie müssen nur noch das Ausgangsorgan zusammenhalten. Die Funktion des ungelagerten bzw. nicht unmittelbar am Grundkörper 40 gelagerten Drehkörpers 50' reduziert sich darauf, das Ausgangsorgan zu komplettieren. Die Dicke dieses regelmäßig als kreisrunde Scheibe ausgebildeten ungelagerten bzw. nicht unmittelbar am Grundkörper 40 gelagerten Drehkörpers 50' kann somit auf ein Minimum reduziert werden, was zur Folge hat, dass die axiale Länge des Getriebes herabgesetzt werden kann. Der mit dem unmittelbar am Grundkörper 40 gelagerten Drehkörper 50 zusammenarbeitende Haltekörper 40' kann in einfachster Ausfertigung ein Rohrabschnitt sein, der stirnseitig nur noch geschliffen und mit Bohrungen für Schrauben versehen werden muss. Komplizierte und aufwendige Bearbeitungen des Haltekörpers entfallen somit. Der Innendurchmesser des Haltekörpers ist auf den Außendurchmesser des unmittelbar am Grundkörper 40 gelagerten Drehkörpers 50 sowie des Grundkörpers 40 abgestimmt. Zwischen dem unmittelbar am Grundkörper 40 gelagerten Drehkörper 50, dem Grundkörper 40 und dem Haltekörper 40' ist ein Laufraum definiert, in dem Wälzelemente angeordnet sind. Ist der unmittelbar am Grundkörper 40 gelagerte Drehkörper 50 an seinen beiden Stirnseiten gelagert, dann können zylindrische Lagerelemente verwendet werden, von denen die einen axial und die anderen radial ausgerichtet sind. Der zweite Laufraum befindet sich in der Ebene des Kreuzes, was zur vorteilhaften axialen Verkürzung des Getriebes (etwa um die Dicke des Kreuzes) und somit zur Gewichtsreduktion führt. Die erfindungsgemäße unmittelbare Lagerung des Drehkörpers 50 am Grundkörper 40 hat zur Folge, dass das Verhältnis zwischen dem Außendurchmesser des zylindrischen Grundkörpers und seinem maximalen Innendurchmesser deutlich kleiner ist als beim Stand der Technik. Damit können auch die Maße des Kreuzes, der Zahnräder, der Öffnungen sowie anderer Teile des Planetengetriebes so aufeinander abgestimmt und optimiert werden, dass die Torsionskapazität des Getriebes (bei unverändertem Außendurchmesser) bei deutlich geringerem Gewicht des Getriebes um bis zu 80 % erhöht werden kann.

Die Erfindung ist insbesondere im Bereich der Herstellung von Planeten- oder Zykloidgetrieben, beispielsweise für den Einsatz in Industrierobotern, für elektrische Parkbremsen in Kraftfahrzeugen, oder ganz allgemein für Anwendungen, welche in einem möglichst kompakten Bauraum ein leichtgewichtiges Getriebe mit hohem Übersetzungsverhältnis und hohen Leistungsdaten erfordern, gewerblich anwendbar.

### Bezugszeichenliste

- 1: Gestell
- 3: Lagerkörper
- 4: durchgehende Öffnung am Eingangsorgan
- 5: Radiallagerkörper
- 10: Eingangsorgan
- 12: Wälzelement
- 30: Zahnrad
- 30a: Achse des Zahnrads
- 30b: Linearführung am Zahnrad
- 31: innere Lauffläche
- 32: axiale Öffnung
- 33: Außenverzahnung
- 34a, 34b: Führungsbahnen der Linearführung am Zahnrad
- 35a, 35b: Vorsprünge am Zahnrad
- 40: Grundkörper
- 40': Haltekörper
- 40a: Drehachse
- 40'a: Lauffläche am Haltekörper
- 41: Innenverzahnung am Grundkörper
- 41 a: Axialnuten am Innenumfang des Grundkörpers
- 41 b: nadelförmiger Wälzkörper, in den Axialnuten angeordnet
- 41pc: Innkreis der Innenverzahnung
- 41fc: Außenkreis der Innenverzahnung
- 42: Wälzlagerung
- 42a: Lauffläche
- 42b: Lauffläche
- 43a: zylinderförmiges Wälzelement
- 43b: zylinderförmiges Wälzelement
- 43c: zylinderförmiges Wälzelement
- 43d: zylinderförmiges Wälzelement
- 43e: zylinderförmiges Wälzelement
- 43g: kugelförmiges Wälzelement
- 43r: zylinderförmiges Wälzelement
- 43a1: Achse
- 43b1: Achse
- 43c1: Achse
- 43d1: Achse
- 43e1: Achse
- 44: Stufe
- 44a: äußere Stirnseite
- 44e: umlaufende Mantelfläche
- 44i: innere Zentrierfläche
- 45: Lagerkäfig
- 46: Trägerkörper
- 47: Öffnungen für Befestigungsmittel
- 49: Stirnseite
- 50: gelagerter Drehkörper
- 50': ungelagerter Drehkörper
- 51, 51': zentrale Öffnung
- 52: Distanzkörper
- 53a, 53b: Öffnung
- 54a,54b: Führungsbahn
- 55a, 55b: Vorsprung
- 59a, 59b: Gewindeaufnahme
- 60, 62: Verbindungselemente
- 70: Transformationselement
- 71: zentrale Öffnung im Transformationselement
- 73: zentrale Partie des Transformationselements
- 74: Arm des Transformationselements
- 74a, 74b: Führungsbahnen gegenüber dem Zahnrad am Arm des Transformationselements
- 75a, 75b: Führungsbahnen gegenüber dem Drehkörper am Arm des Transformationselements
- 76, 76': Grenzfläche
- 80, 90: Wälzelement
- 91: Lauffläche
- 92: Dichtung
- 93: Dichtung
- 94: Deckel
- 95: Befestigungsmittel
- e: Exzentrizität
- w: Breite eines Armes des Transformationselements
- l: effektive Länge der Laufbahnen an den Armen des Transformationselements

## Patentansprüche

1. Getriebe mit einem eine Innenverzahnung (41) sowie eine Drehachse (40a) aufweisenden hohlzylinderartigen Grundkörper (40) mit Stirnseiten (49), in dem ein angetriebenes Eingangsorgan (10) sowie ein Ausgangsorgan drehbar gelagert sind, wobei das Ausgangsorgan zwei unverdrehbar miteinander verbundene, einen quer zur Drehachse (40a) verlaufenden Querschnitt mit kreisrunder Außenkontur aufweisende Drehkörper (50, 50') umfasst, zwischen denen mindestens ein Zahnrad (30) sowie Mittel (70) zur Umwandlung von Planetenbewegungen des Zahnrades (30) in Rotationsbewegungen des Ausgangsorgans angeordnet sind, dabei sind die das Ausgangsorgan zusammenhaltenden Kräfte sowie die Lagerungskräfte, die zwischen dem Ausgangsorgan und dem Grundkörper (40) wirken, derart voneinander unabhängig, dass zumindest in axialer Richtung wirkende äußere Kräfte von einem der beiden Drehkörper übernommen sind und der andere Drehkörper frei von solchen Kräften ist, so dass eine von die beiden Drehkörper zusammenhaltenden Verbindungsmitteln (60) wirkende Kraft statisch und unabhängig von äußeren Kräften und Momenten ist, wobei das Eingangsorgan (10) eine durchgehende zylinderförmige Öffnung (4) aufweist,
**dadurch gekennzeichnet,**
**dass** ein Zahnrad (10a) mit einer Innenverzahnung (10a') an dem Eingansorgan (10) angebracht ist, welche Innenverzahnung (10a') mit einer Außenverzahnung (10b') eines Rades (10b) in Eingriff steht, wobei der Durchmesser der Innenverzahnung (10a') kleiner ist als der Durchmesser der Öffnung (4) und der Abstand (k) zwischen der Drehachse (40a) und der Achse des Rades (10b) kleiner ist als der Radius der Öffnung (4).

2. Getriebe nach Anspruch 1,
**dadurch gekennzeichnet,**
**dass** die Lagerungskräfte zwischen dem Ausgangsorgan und dem Grundkörper (40) wirken, dass die das Ausgangsorgan zusammenhaltende Axialkräfte zwischen den Drehkörpern (50, 50') des Ausgangsorgans aufgebracht sind, und dass axiale Lagerungskräfte, die zwischen dem Ausgangsorgan und dem Grundkörper (40) wirken, zwischen nur einem der beiden Drehkörper (50, 50') des Ausgangsorgans und dem Grundkörper (40) aufgebracht sind.

3. Getriebe nach Anspruch 2,
**dadurch gekennzeichnet,**
**dass** die das Ausgangsorgan zusammenhaltenden Axialkräfte durch die zwischen den Drehkörpern (50, 50') des Ausgangsorgans wirkenden Verbindungsmittel (60) aufgebracht sind.

4. Getriebe nach Anspruch 2 oder 3,
**dadurch gekennzeichnet,**
**dass** die axialen Lagerungskräfte, die zwischen dem Ausgangsorgan und dem Grundkörper (40) wirken, mittels nur auf einen der beiden Drehkörper (50, 50') des Ausgangsorgans einwirkenden Mitteln (43a, 43b, 43d, 43e, 43g) aufgebracht sind.

5. Getriebe nach einem der vorhergehenden Ansprüche,
**dadurch gekennzeichnet,**
**dass** das Ausgangsorgan am Grundkörper (40) mittels eines mit einer Stirnseite (49) verbundenen Haltekörpers (40') befestigt ist.

6. Getriebe nach Anspruch 5,
**dadurch gekennzeichnet,**
**dass** der Haltekörper (40') ringförmig ist.

7. Getriebe nach Anspruch 3 oder 4,
**dadurch gekennzeichnet,**
**dass** zur Lagerung des Ausgangsorgans am Grundkörper (40) einer der Drehkörper (50) unmittelbar am oder im Grundkörper (40) drehbar gelagert ist.

8. Getriebe nach Anspruch 3 oder 4,
**dadurch gekennzeichnet.**
**dass** zur Lagerung des Ausgangsorgans am Grundkörper (40) einer der Drehkörper (50) zur Abstützung zumindest gegenüber Axialkräften unmittelbar am oder im Grundkörper (40) drehbar gelagert ist, wohingegen der andere Drehkörper (50') nicht am oder im Grundkörper (40) gelagert ist, oder nur mittelbar am oder im Grundkörper (40) drehbar gelagert, oder nur zur Abstützung gegenüber Radialkräften unmittelbar am oder im Grundkörper (40) drehbar gelagert ist.

9. Getriebe nach Anspruch 7,
**dadurch gekennzeichnet,**
**dass** einer der Drehkörper (50) sowohl zur Abstützung gegenüber Axialkräften, als auch zur Abstützung gegenüber Radialkräften unmittelbar am oder im Grundkörper (40) drehbar gelagert ist.

10. Getriebe nach Anspruch 6 und 7,
**dadurch gekennzeichnet,**
**dass** sich der unmittelbar am oder im Grundkörper (40) drehbar gelagerte Drehkörper (50) über Lagermittel (43a, 43b, 43c, 43d, 43e, 43g, 43r) an dem mit der einen Stirnseite (49) fest verbundenen Haltekörper (40') abstützt.

11. Getriebe nach Anspruch 10,
**dadurch gekennzeichnet,**
**dass** die Lagermittel (43a, 43b, 43c, 43d, 43e, 43g, 43r) im Bereich derjenigen Stirnseite (49) angeordnet sind, an der der Haltekörper (40') angeordnet ist.

12. Getriebe nach Anspruch 10 oder 11,
**dadurch gekennzeichnet,**
**dass** mindestens an dem unmittelbar am oder im Grundkörper (40) gelagerten Drehkörper (50) sowie im Grundkörper (40) Laufbahnen (50c, 50d, 42a, 42b) vorgesehen sind, für die Lagermittel bildende Wälzkörper (43a, 43b, 43c, 43d, 43e, 43g, 43r).

13. Getriebe nach einem der Ansprüche 10 bis 12,
**dadurch gekennzeichnet,**
**dass** zumindest die Lagermittel (43a), die zur Abstützung des unmittelbar am oder im Grundkörper (40) gelagerten Drehkörpers (50) gegenüber in axialer Richtung hin zur Innenverzahnung (41) verlaufenden Kräften vorgesehen sind, im Bereich eines der Mittels (70) Umwandlung von Planetenbewegungen des Zahnrades (30) in Rotationsbewegungen des Ausgangsorgans , welches auf der selben Seite der Innenverzahnung (41) wie der unmittelbar am oder im Grundkörper (40) gelagerte Drehkörper (50) angeordnet ist, radial nach außen versetzt angeordnet sind.

14. Getriebe nach einem der Ansprüche 10 bis 12,
**dadurch gekennzeichnet,**
**dass** die Lagermittel als zylinderförmige Wälzelemente (43d, 43e) ausgebildet sind, welche den unmittelbar am oder im Grundkörper (40) gelagerten Drehkörper (50) sowohl in axialer, als auch in radialer Richtung abstützen, und welche in einem gemeinsamen, durch am Haltekörper (40'), dem Grundkörper (40), sowie dem unmittelbar am oder im Grundkörper (40) gelagerten Drehkörper (50) ausgebildete, jeweils um 45° gegenüber der Drehachse geneigte Laufflächen (40'a, 42a, 50c, 50d) begrenzten Ringraum im Bereich der Stirnseite (49), an der der Haltekörper (40') angeordnet ist, angeordnet sind.

15. Getriebe nach Anspruch 8,
**dadurch gekennzeichnet,**
**dass** das Getriebe auf seiner dem ungelagerten oder nur mittelbar am oder im Grundkörper (40) gelagerten oder nur zur Abstützung gegenüber Radialkräften unmittelbar am oder im Grundkörper (40) gelagerten Drehkörper (50') zugewandten Seite einen Deckel (94) aufweist, der die beweglichen Teile im Inneren des Getriebes vor Verschmutzung schützt.

## Claims

1. A transmission, having a hollow-cylindrical rotary body (40) with an internal toothing (41) and a rotary axis (40a) and with face ends (49), in which base body a driven input device (10) and an output device are rotably supported, and the output device includes two rotary bodies (50, 50'), connected nonrotatably with one another and having a cross section of circular cross section extending transversely to the rotary axis (40a), between which rotary bodies at least one gear wheel (30) as well as means (70) for converting planetary motions of the gear wheel (30) into rotary motions of the output device, and the forces holding the output device together and the bearing forces that are operative between the output device and the base body (40) are independent of one another in such a way that external forces that are operative at least in the axial direction are absorbed by one of the two rotary bodies, and the other rotary body is free of such forces, so that a force exerted by connecting means (60) that hold the two rotary bodies together is static and independent of external forces and moments, and the input device (10) has a continuous cylindrical opening (4),
**characterized in that**
a gear wheel (10a) having an internal toothing (10a') is mounted on the input device (10), which internal toothing (10a') is in engagement with an external toothing (10 b') of a wheel (10b), and the diameter of the internal toothing (10a') is less than the diameter of the opening (4), and the spacing (k) between the rotary axis (40a) and the axis of the wheel (10b) is less than the radius of the opening (4).

2. The transmission according to claim 1,
**characterized in that**
the bearing forces are operative between the output device and the base body (40); that the axial forces holding the output device together are exerted between the rotary bodies (50, 50') of the output device; and that axial bearing forces that are operative between the output device and the base body (40) are exerted between only one of the rotary bodies (50, 50') of the output device and the base body (40).

3. The transmission according to claim 2,
**characterized in that**
the axial forces holding the output device together are exerted by the connecting means (60) that are operative between the rotary bodies (50, 50') of the output device.

4. The transmission according to claim 2 or 3,
**characterized in that**
the axial bearing forces that are operative between the output device and the base body (40) are exerted by means of means (43a, 43b, 43d, 43e, 43g) that act on only one of the two rotary bodies (50, 50') of the output device.

5. The transmission according to one of the foregoing claims,
**characterized in that**
the output device is secured to the base body (40) by means of a retaining body (40') that is connected to one face end (49).

6. The transmission according to claim 5,
**characterized in that**
the retaining body (40') is annular.

7. The transmission according to claim 3 or 4,
**characterized in that**
for bearing the output device on the base body (40), one of the rotary bodies (50) is rotatably supported directly on or in the base body (40).

8. The transmission according to claim 3 or 4,
**characterized in that**
for bearing the output device on the base body (40), one of the rotary bodies (50), for bracing against at least axial forces, is rotatably supported directly on or in the base body (40), while conversely the other rotary body (50') is not supported on or in the base body (40), or is rotatably supported only indirectly on or in the base body (40), or, for bracing against only radial forces, is rotatably supported directly on or in the base body (40).

9. The transmission according to claim 7,
**characterized in that**
both for bracing against axial forces and for bracing against radial forces, one of the rotary bodies (50) is rotatably supported directly on or in the base body.

10. The transmission according to claims 6 and 7,
**characterized in that**
the rotary body (50) rotably supported directly on or in the base body (40) is braced via bearing means (43a, 43b, 43c, 43d, 43e, 43g, 43r) on the retaining body (40'), which is firmly connected to the one face end (49).

11. The transmission according to claim 10,
**characterized in that**
the bearing means (43a, 43b, 43c, 43d, 43e, 43g, 43r) are disposed in the region of the face end (49) on which the retaining body (40') is disposed.

12. The transmission according to claim 10 or 11,
**characterized in that**
at least on the rotary body (50) supported directly on or in the base body (40), and in the base body (40), races (50c, 50d, 42a, 42b) are provided for roller bodies (43a, 43b, 43c, 43d, 43e, 43g, 43r) that form the bearing means.

13. The transmission according to one of claims 10-12,
**characterized in that**
at least the bearing means (43a) that are provided for bracing the rotary body (50) that is supported directly on or in the base body (40) against forces extending in the axial direction toward the internal toothing (41) are radially offset outward in the region of one of the means (70) for converting planetary motions of the gear wheel (30) into rotary motions of the output device, which means is disposed on the same side of the internal toothing (41) as the rotary body (50) that is supported directly on or in the base body (40).

14. The transmission as defined by one of claims 10-12,
**characterized in that**
the bearing means are embodied as cylindrical roller elements (43d, 43e), which in both the axial and the radial direction brace the rotary body (50) that is supported directly on or in the base body (40), and which are disposed in a common annular chamber in the vicinity of the face end (49) on which the retaining body (40') is disposed, the annular chamber being defined by races (40'a, 42a, 50c, 50d) which are embodied on the retaining body (40'), on the base body (40), and on the rotary body (50) supported directly on or in the base body (40) and which are each inclined by 45° to the rotary axis.

15. The transmission according to claim 8,
**characterized in that**
the transmission, on its side oriented toward the rotary body (50') that is unsupported or is only indirectly supported on or in the base body (40) or that for bracing only against radial forces is supported directly on or in the base body (40), has a cap (94), which protects the moving parts in the interior of the transmission against getting dirty.

## Revendications

1. Transmission dotée d'un corps de base (40) du type cylindre creux à faces extrêmes (49), muni d'une denture intérieure (41), ainsi que d'un axe de rotation (40a), et dans lequel sont montés à rotation un organe d'entrée (10) mené, ainsi qu'un organe de sortie, ledit organe de sortie comprenant deux corps rotatifs (50, 50') reliés l'un à l'autre sans faculté de rotation conjointe, pourvus d'une section transversale à profil extérieur circulaire s'étendant transversalement par rapport à l'axe de rotation (40a), et entre lesquels sont interposés au moins une roue dentée (30), ainsi que des moyens (70) destinés à convertir des mouvements planétaires de ladite roue dentée (30) en des mouvements rotatoires de l'organe de sortie, sachant que les forces assurant la cohésion dudit organe de sortie, ainsi que les forces de portée agissant entre ledit organe de sortie et le corps de base (40), sont indépendantes les unes des autres de façon telle qu'au moins des forces extérieures, agissant dans le sens axial, soient prises en charge par l'un des deux corps rotatifs et que l'autre corps rotatif ne soit pas sollicité par de telles forces, si bien qu'une force émanant de moyens de liaison (60), assurant la cohésion des deux corps rotatifs, est statique et non tributaire de forces et de couples extérieurs, l'organe d'entrée (10) étant percé d'un orifice cylindrique traversant (4),
**caractérisée par le fait**
**qu'**une roue dentée (10a) à denture intérieure (10a') est implantée sur l'organe d'entrée (10), laquelle denture intérieure (10a') est en prise avec une denture extérieure (10b') d'une roue (10b), le diamètre de ladite denture intérieure (10a') étant plus petit que le diamètre de l'orifice (4) et la distance (k), comprise entre l'axe de rotation (40a) et l'axe de la roue (10b), étant plus petite que le rayon dudit orifice (4).

2. Transmission selon la revendication 1,
**caractérisée par le fait**
**que** les forces de portée agissent entre l'organe de sortie et le corps de base (40) ; par le fait que les forces axiales, assurant la cohésion dudit organe de sortie; sont appliquées entre les corps rotatifs (50, 50') dudit organe de sortie ; et par le fait que des forces axiales de portée, agissant entre ledit organe de sortie et ledit corps de base (40), sont appliquées entre ledit corps de base (40) et l'un seulement des deux corps rotatifs (50, 50') dudit organe de sortie.

3. Transmission selon la revendication 2,
**caractérisée par le fait**
**que** les forces axiales, assurant la cohésion de l'organe de sortie, sont appliquées par les moyens de liaison (60) agissant entre les corps rotatifs (50, 50') dudit organe de sortie.

4. Transmission selon la revendication 2 ou 3,
**caractérisée par le fait**
**que** les forces axiales de portée, agissant entre l'organe de sortie et le corps de base (40), sont appliquées par des moyens (43a, 43b, 43d, 43e, 43g) agissant sur l'un seulement des deux corps rotatifs (50, 50') dudit organe de sortie.

5. Transmission selon l'une des revendications précédentes,
**caractérisée par le fait**
**que** l'organe de sortie est fixé au corps de base (40) au moyen d'un corps de retenue (40') relié à une face extrême (49).

6. Transmission selon la revendication 5,
**caractérisée par le fait**
**que** le corps de retenue (40') est de forme annulaire.

7. Transmission selon la revendication 3 ou 4,
**caractérisée par le fait**
**que** l'un (50) des corps rotatifs est directement monté à rotation, sur ou dans le corps de base (40), en vue du montage de l'organe de sortie sur ledit corps de base (40).

8. Transmission selon la revendication 3 ou 4,
**caractérisée par le fait**
**que** l'un (50) des corps rotatifs est directement monté à rotation, sur ou dans le corps de base (40), afin de procurer un appui au moins vis-à-vis de forces axiales, en vue du montage de l'organe de sortie sur ledit corps de base (40), l'autre corps rotatif (50') n'étant, en revanche, pas monté sur ou dans ledit corps de base (40), ou n'étant qu'indirectement monté à rotation sur ou dans ledit corps de base (40), ou bien étant directement monté à rotation, sur ou dans ledit corps de base (40), uniquement en vue de procurer un appui vis-à-vis de forces radiales.

9. Transmission selon la revendication 7,
**caractérisée par le fait**
**que** l'un (50) des corps rotatifs est directement monté à rotation, sur ou dans le corps de base (40), tant pour procurer un appui vis-à-vis de forces axiales, que pour procurer un appui vis-à-vis de forces radiales.

10. Transmission selon les revendications 6 et 7,
**caractérisée par le fait**
**que** le corps rotatif (50) directement monté à rotation sur ou dans le corps de base (40) prend appui, par l'intermédiaire de moyens de portée (43a, 43b, 43c, 43d, 43e, 43g, 43r), sur le corps de retenue (40') relié rigidement à l'une des faces extrêmes (49).

11. Transmission selon la revendication 10,
**caractérisée par le fait**
**que** les moyens de portée (43a, 43b, 43c, 43d, 43e, 43g, 43r) se trouvent dans la région de la face extrême (49) à laquelle le corps de retenue (40') est disposé.

12. Transmission selon la revendication 10 ou 11,
**caractérisée par le fait**
**que** des pistes de roulement (50c, 50d, 42a, 42b), affectées à des corps de roulement (43a, 43b, 43c, 43d, 43e, 43g, 43r) matérialisant les moyens de portée, sont prévues au moins sur le corps rotatif (50) directement monté sur ou dans le corps de base (40), ainsi que dans ledit corps de base (40).

13. Transmission selon l'une des revendications 10 à 12,
**caractérisée par le fait**
**qu'**au moins les moyens de portée (43a) par lesquels un appui est procuré, au corps rotatif (50) directement monté sur ou dans le corps de base (40), vis-à-vis de forces pointant axialement en direction de la denture intérieure (41), sont agencés avec décalage radial vers l'extérieur dans la région de l'un des moyens (70) destinés à convertir des mouvements planétaires de la roue dentée (30) en des mouvements rotatoires de l'organe de sortie, lequel moyen est situé du même côté de ladite denture intérieure (41) que celui sur lequel se trouve ledit corps rotatif (50) directement monté sur ou dans ledit corps de base (40).

14. Transmission selon l'une des revendications 10 à 12,
**caractérisée par le fait**
**que** les moyens de portée sont réalisés sous la forme d'éléments cylindriques de roulement (43d, 43e) qui procurent un appui, tant dans le sens axial que dans le sens radial, au corps rotatif (50) directement monté sur ou dans le corps de base (40) et qui sont logés, dans la région de la face extrême (49) à laquelle le corps de retenue (40') est disposé, dans un espace annulaire commun délimité par des surfaces de roulement (40'a, 42a, 50c, 50d) respectivement inclinées de 45° par rapport à l'axe de rotation et ménagées sur ledit corps de retenue (40'), sur ledit corps de base (40), ainsi que sur ledit corps rotatif (50) directement monté sur ou dans ledit corps de base (40).

15. Transmission selon la revendication 8,
**caractérisée par le fait**
**que** ladite transmission est dotée, sur son côté tourné vers le corps rotatif (50') dépourvu de portée ou uniquement monté en mode indirect, sur ou dans le corps de base (40), voire directement monté, sur ou dans ledit corps de base (40), en vue de procurer un appui uniquement vis-à-vis de forces radiales, d'un couvercle (94) par lequel les parties mobiles sont protégées d'un encrassement à l'intérieur de ladite transmission.
